**Europäisches Patentamt**

**European Patent Office**

**Office européen des brevets**

(19)

(11) Veröffentlichungsnummer: **0 118 606**
**B1**

(12) ## EUROPÄISCHE PATENTSCHRIFT

(45) Veröffentlichungstag der Patentschrift:
**12.04.89**

(51) Int. Cl.⁴: **B 24 B 35/00**, B 23 H 1/04

(21) Anmeldenummer: **83112067.0**

(22) Anmeldetag: **01.12.83**

(54) Maschine zur Herstellung einer Elektrode einer bestimmten Raumform mittels eines Formenschleif-Werkzeuges.

(30) Priorität: **21.12.82 CH 7432/82**
**14.10.83 CH 5608/83**

(43) Veröffentlichungstag der Anmeldung:
**19.09.84 Patentblatt 84/38**

(45) Bekanntmachung des Hinweises auf die Patenterteilung:
**12.04.89 Patentblatt 89/15**

(84) Benannte Vertragsstaaten:
**DE FR GB IT**

(56) Entgegenhaltungen:
**CH-A- 569 550**
**DE-A- 2 603 614**
**DE-A- 2 711 697**
**US-A- 3 988 863**
**US-A- 4 277 915**

**WERKSTATT UND BETRIEB, Band 115, Nr. 10, 1982,
Seiten 663-66 6, München; H.C. HAUSERMANN
"Formschleifen-Alternative für EDM-Grafitelektroden"**

(73) Patentinhaber: **Ullmann, Werner, Dr., Casa San Biagio,
CH-6644 Orselina (CH)**

(72) Erfinder: **Ullmann, Werner, Dr., Casa San Biagio,
CH-6600 Muralto (CH)**
Erfinder: **Bantle, Max, Wiien 1027, CH-9432 Platz
Walzenhausen (CH)**
Erfinder: **Neumann, Harry, Dr., Hochstrasse 7,
D-5828 Ennepetal 13 (DE)**
Erfinder: **Seuser, Ulrich Hans, Dipl. Ing., Im Bruch 12,
D-5450 Neuwied 13 (DE)**
Erfinder: **Mathys, André, Dipl. Ing., Bodenhostatt 2,
CH-6373 Ennetbürgen (CH)**

(74) Vertreter: **Grieskamp, Johannes Peter, Im
Baumgarten 7, CH-8123 Ebmatingen (CH)**

## Beschreibung

Die Erfindung bezieht sich auf eine Maschine zur Herstellung eines Werkstückes nach dem Oberbegriff des Patentanspruchs 1.

Bekanntlich umfaßt der Formenbau die Herstellung von Formen für den Druckguß, Spritzguß, das Stanzen, Warmpressen, Kaltpressen und Schmieden von Materialien aus Stahl, Metallen, Kunststoff, Gummi sowie deren Legierungen bzw. Mischungen. Diese Formen sind häufig kompliziert und weisen eine dreidimensionale Konstruktion auf. Besonders in der Flugzeug- und Automobilindustrie werden solch schwierig herstellbare Formen unter Einhaltung kleinster Toleranzen verlangt. Auf dieselbe Art und Weise werden Werkstücke oder Konstruktionsteile (z.B. im Triebwerkbau) aus schwer zerspanbaren Materialien (z.B. hoch warmfeste Legierungen) hergestellt. Bekanntlich werden solche Formen oder Triebwerkteile durch funkenerosive bzw. elektrochemische Maschinen hergestellt. Die hierfür benützten Elektroden haben die gleiche komplizierte Oberfläche wie die herzustellenden Formen bzw. Teile. Im Laufe der jüngsten Entwicklung werden solche Elektroden auf besonderen Maschinen hergestellt. Die Herstellung erfolgt in der Weise, daß die Elektrode aus dem vollen Material durch einen Schleifvorgang oder Feilvorgang herausgearbeitet wird. Das Material kann z.B. Graphit sein. Das hierfür erforderliche Werkzeug hat bereits die Form der Elektrode mit einem Untermaß. Durch eine Relativbewegung zwischen dem Werkzeuge und der aus dem vollen Stück herauszuarbeitenden Elektrode erfolgt der Schleifvorgang oder Feilvorgang. Zur Unterstützung des Schleif- oder Feilvorgangs wird ein Schleifmittel in die Oberfläche des Werkzeugs eingebracht. Ferner wird eine Flüssigkeit in den Spalt 46 zwischen Werkzeug und Werkstück getan. Die Relativbewegung setzt sich aus zwei Bewegungstypen zusammen. Der eine Typ ist die Vorschubbewegung des Schleif- oder Feilwerkzeugs zum oder vom Elektrodenwerkstück (senkrecht). Diese Vorschubbewegung kann auch kreisförmig (senkrecht) sein. Der andere Typ ist eine kreisende Bewegung des Elektrodenwerkstücks in der horizontalen Ebene. Die kreisende Bewegung wird auch als orbitale oder planetäre Bewegung bezeichnet. Sie kann auch kugelförmig sein.

Der Radius bzw. die Exzentrizität der kreisenden Bewegung kann verstellt werden. Der Schleifvorgang wird solange durchgeführt bis das Elektrodenwerkstück die Raumform des Werkzeuges angenommen hat. Dann wird die relative Bewegung beendet. Dies erfolgt durch ein an der Maschine eingestelltes Maß, das auch Tiefenendmaß genannt wird. Die Raumform des Elektrodenwerkstückes kann gegenüber der Raumform des Werkzeugs verkleinert oder vergrößert werden. Dies wird durch Einstellen der gewünschten Exzentrizität der kreisenden Bewegung bewerkstelligt.

Wenn auch die DE-OS 2 603 614 eine Funkenerosionsmaschine, d.h. eine andere Gattung als die Formenschleifmaschine der Erfindung betrifft, wird in der Vorveröffentlichung eine kreisende Bewegung zwischen der aus Kupfer oder Messing bestehenden Elektrode und dem von der Elektrode elektroerosiv zu bearbeitenden Werkstück aus gehärtetem Stahl erzeugt. Zwischen Elektrode und Werkstück muß immer ein Arbeitsspalt mit einer dielektrischen Flüssigkeit eingehalten werden, in welchem die elektrischen Bearbeitungsfunken sich entladen können. Die kreisende Bewegung setzt sich aus zwei Hin- und Her-Bewegungen zusammen, die um 90° zueinander versetzt sind. Für jede Hin- und Her-Bewegung ist eine durch einen Motor angetriebene Kurvenscheibe vorgesehen, deren Umfang von einem Abtaster mechanisch abgetastet wird. Eine Änderung der Bewegungsamplitude ist nur dann möglich, wenn die Kurvenscheibe eine besondere Form seiner Umfangsfläche hat. Die Bewegungsamplitude kann nur während des Betriebes geändert werden. Ein wesentlicher Nachteil einer solchen Bewegungserzeugung liegt in der ungewollten Änderung der Amplituden der Bewegungen, die im Laufe einer längeren Betriebszeit durch Veränderung des Abtastdruckes und durch Verschleiß bzw. Verformung der Abtastflächen entstehen. Diese Änderungen können bei jeder Kurvenscheibe unterschiedlich sein, sodaß jede Hin- und Her-Bewegung eine andere Amplitude hat, wodurch die aus zwei Hin- und Her-Bewegungen zusammengesetzte Umlaufbewegung nicht mehr kreisförmig ist. Hierdurch berühren sich Elektrode und Werkstück, erzeugen einen Kurzschluß und beenden die funkenerosive Bearbeitung. Elektrode und Werkstück können an den Berührungsstellen deformiert oder sogar gänzlich unbrauchbar werden. Ein weiterer Nachteil liegt in der komplizierten mechanischen Übertragung zwischen Einstellung und Ausführung der Amplitudenänderung, welche Ungenauigkeiten erzeugt.

Im US-Patent 4 277 915 ist eine Formenschleifmaschine mit mindestens zwei Exzenterantrieben für die kreisende Bewegung des Werkstückes relativ zum Werkzeug beschrieben. Der gewünschte Betrag der Exzentrizität für jeden Exzenterantrieb kann nur bei stillstehender Maschine, nach Lösen mehrerer Verbindungsschrauben und nach Anbringung einer Exzentrizität-Einstelleinrichtung geändert werden. Nachteilig ist hierbei, daß der eingestellte Betrag der Exzentrizität bei jedem Exzenterantrieb sich ungewollt verändern kann, wenn an jedem Exzenterantrieb die Verbindungsschrauben wieder angezogen werden. Exzenterantriebe mit ungleichen Beträgen der Exzentrizität üben deformierende oder zerstörende Kräfte auf Maschinentisch, Werkstück und auf sich selber aus, wenn sie in Drehbewegungen versetzt werden.

Die bekannte Herstellungsweise durch Formenschleif-Maschinen hat also folgende Nachteile:

– Die Exzentrizität der relativen Bewegung kann nicht während des Schleifvorgangs geändert werden. Zu diesem Zweck muß die Maschine stillgesetzt werden.

– Der Anpreßdruck, mit dem das Werkzeug während des Schleifens an das Elektrodenwerkstück angepreßt wird, muß den sich ändernden Schleifzuständen angepaßt werden. Die Schleifzustände ändern sich je nach der Größe, der in Eingriff stehenden Schleiffläche des Werkzeugs und des Werkstücks. Besonders bei komplizierten dreidimensionalen Raumformen ändert sich die Größe der in Eingriff stehenden Schleifflächen oder deren Winkel innerhalb kurzer Zeit. Eine solche Anpassung des Anpreßdrucks an die Schleifverhältnisse und an die Bruchfestigkeit des Werkzeugs und des Werkstücks ist bei der bekannten Herstellungsweise nicht möglich. Daher besteht die Gefahr, daß der Anpreßdruck zu gewissen Zeiten entweder zu hoch oder zu niedrig ist. Dies bedeutet entweder mangelhafte Flächenteile oder Beschädigungen am Werkstück bzw. Werkzeug oder eine zu lange Schleifzeit. In beiden Fällen werden die Herstellungskosten unnötig erhöht.

– Zur besseren Spülung des Schleifspaltes wird das Werkzeug in Intervallen vom Werkstück zurückgezogen und nach einer kurzen Zeit wieder zum Werkstück vorgeschoben. Die Spülflüssigkeit transportiert das abgetragene Material aus dem Spalt. Die Geschwindigkeit für das kurzzeitige Zurückziehen und Vorfahren ist größer als die Vorschubgeschwindigkeit während des Schleifens bzw. Feilens. Wenn das Werkzeug immer tiefer in das Werkstück eindringt, wird die Fläche, die am Schleifen bzw. Feilen beteiligt ist, größer. Die Flächenform wird komplizierter. In diesen Fällen ist die Geschwindigkeit für das schnelle Zurückziehen und Vorfahren nicht mehr auf den Zustand im Spalt angepaßt. Dies kann dann zu Beschädigungen der Fläche des Werkzeuges und Werkstückes führen.

– Das Zurückziehen und Vorfahren des Werkzeuges erfolgt mit teilweise zu großer Kraft, weil die Kraft nicht auf das Gewicht des Werkzeugs abgestimmt werden kann. Bekanntlich wechselt das Gewicht von Werkzeug zu Werkzeug. Bei jedem Wechsel der Bewegungsrichtung und bei jedem Beschleunigen und Abbremsen der Bewegung ergeben sich Stöße auf das Werkzeug, welche seine präzise Einstellung zum Werkstück in nicht gewünschter Weise verändern. Das bedeutet eine schlechte Raumform des Werkstücks.

Die Erfindung hat die Aufgabe, die Nachteile der bekannten Maschinen zur Herstellung von Elektroden zu beseitigen. Durch eine besondere Vorrichtung kann die Exzentrizität während des Bearbeitens verstellt werden. Die Raumform des fertig bearbeiteten Elektrodenwerkstückes ist in jeder Weise komplementär zur Raumform des Werkzeugs. Mit einem einzigen Werkzeug können mehrere Werkstücke mit komplizerter Raumform hergestellt werden.

Eine Baugruppe bewerkstelligt in jedem Zeitpunkt des Schleifens folgende Funktionen:

– Anpassung der Anpreßkraft zwischen dem Werkzeug und dem Werkstück an die Zustände im Arbeitsspalt. Hierdurch werden Beschädigungen an Werkzeug und Werkstück sowie mangelhafte Herstellung von Flächen am Werkstück vermieden. Außerdem wird die Schleifzeit verkürzt. Die Herstellungskosten werden für das Werkstück gesenkt.

– Anpassung der intervallmäßigen Abhebe- und Zustellgeschwindigkeit an die Zustände im Spalt und auch an die Menge der zugeführten Spülflüssigkeit. Hierdurch werden die Spülverhältnisse im Spalt verbessert. Das abgeschliffene Material wird sogar bei komplizierten Flächen vollständig aus dem Spalt entfernt.

– Die Übergänge von der normalen Vorschubgeschwindigkeit zur wesentlich größeren intervallmäßigen Abhebe- und Zustellgeschwindigkeit und umgekehrt werden sanft gestaltet. Mit anderen Worten ausgedrückt werden der Beschleunigungs- und der Bremsvorgang dynamisch gesteuert. Hierdurch werden die sogenannten Schaltstöße oder Schläge und die damit verbundenen Geräusche vermieden. Die Maschine wird dadurch geschont, was ihre Lebensdauer ohne Einbuße an Präzision stark verlängert.

Zur Lösung dieser Aufgabestellung wird die im Patentanspruch 1 definierte Erfindung vorgeschlagen.

Ein Ausführungsbeispiel der Erfindung wird anhand der Zeichnungen näher erläutert. Es zeigen:

Figur 1: eine Maschine gemäß der Erfindung;

Figur 2: die Vorrichtung für die planetäre Bewegung;

Figur 3: ein Teil der Vorrichtung der Figur 2;

Figur 4: die hydraulische Anlage für die Vorschub-, Rückzug- und Intervall-Bewegung;

Figur 5: ein Diagramm der Vorschub- und Intervall-Bewegung;

Figuren 6–8: die elektronische Steuerung für die in den Figuren 1, 2, 3 und 4 gezeigten Ausführungen der Erfindung.

Figur 9: ein Detail der Maschine.

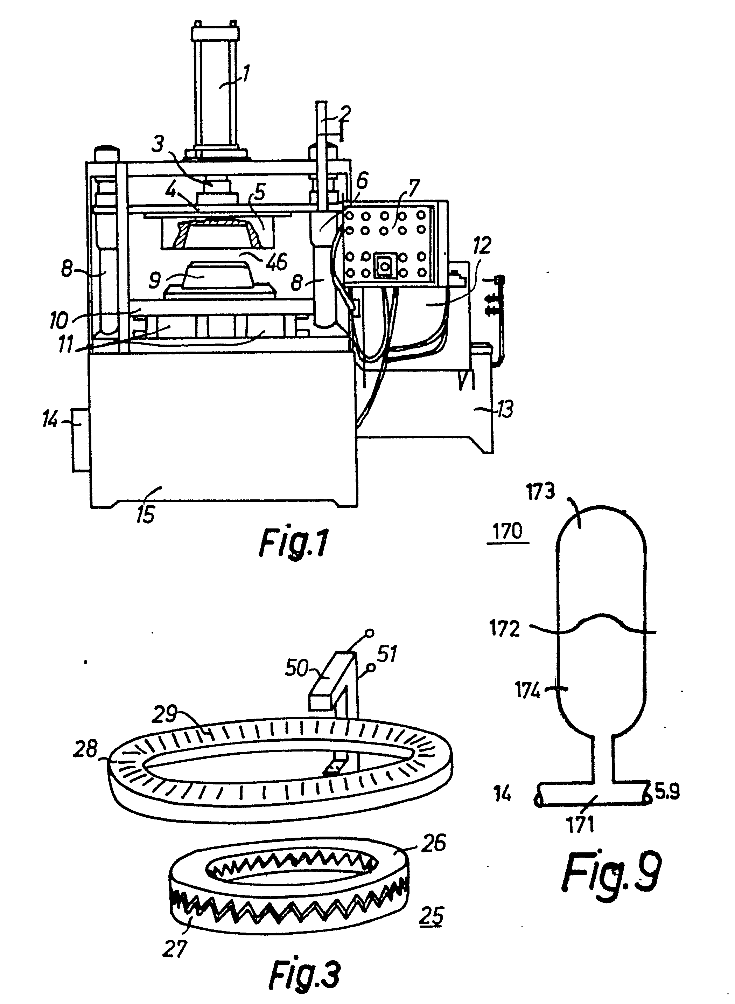

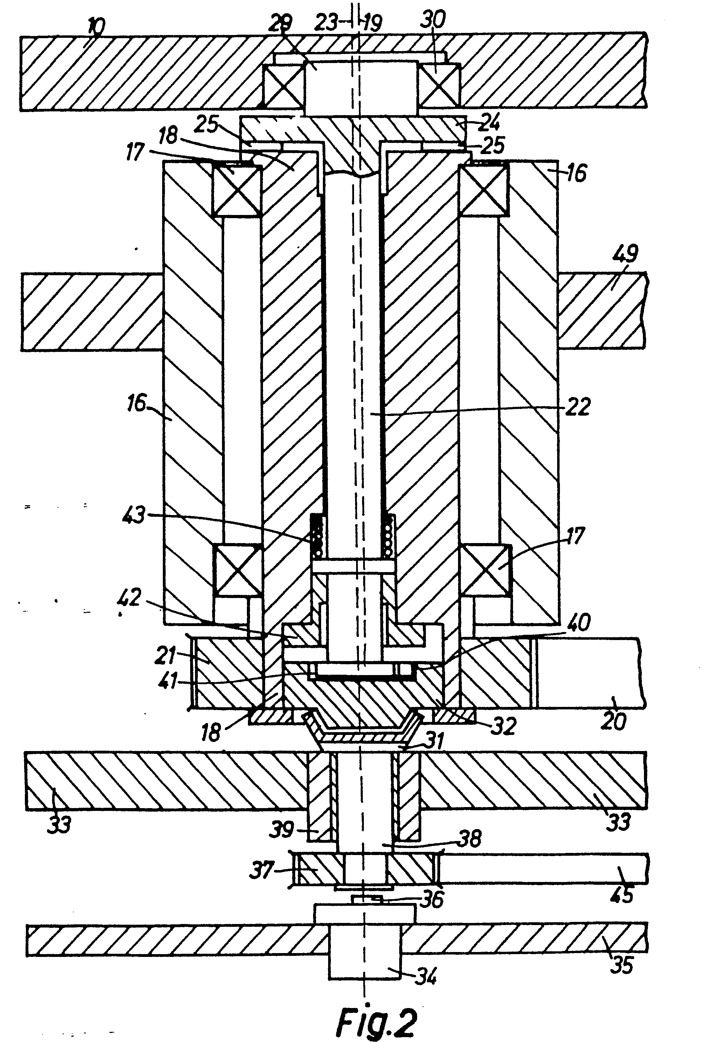

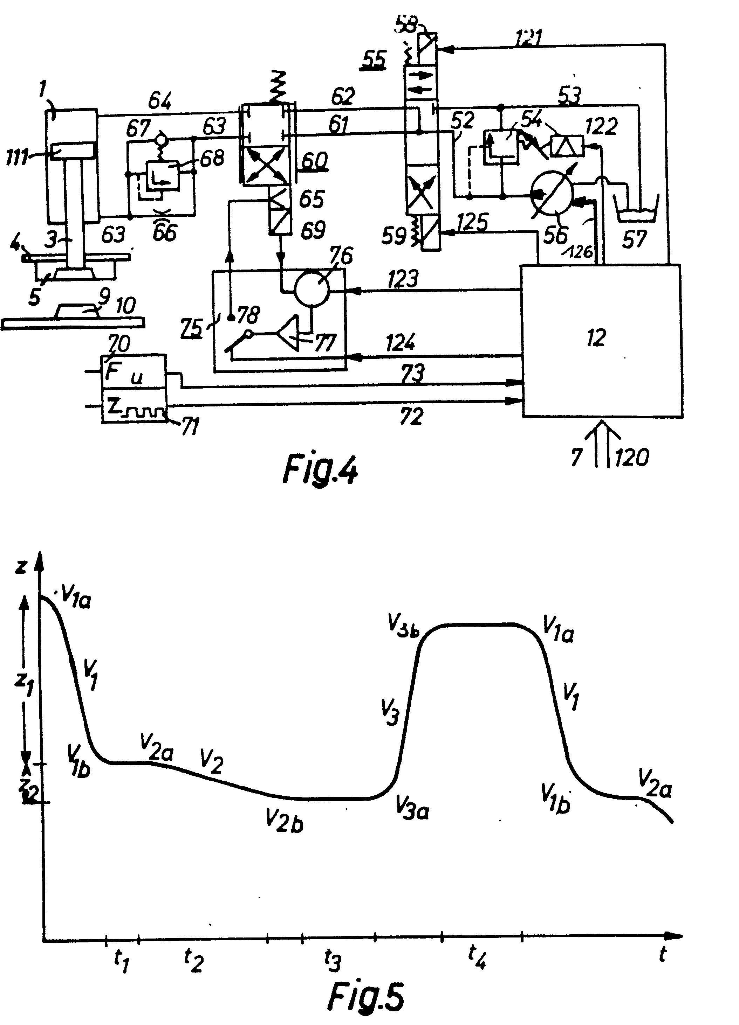

Die Figur 1 zeigt den Hydraulikzylinder 1, in dem der Stößel bzw. die Pinole 3 bewegbar angeordnet ist. Am Stößel 3 ist die Stößelplatte 4 befestigt, die mittels der vier Säulen 8 und den Führungen 6 geführt wird. Von den Säulen sind nur zwei dargestellt. An der Stößelplatte 4 befindet sich eine Konstruktion, an der die Meßeinheit 2 befestigt ist. Diese Meßeinheit kann zum Beispiel der Tiefenendschalter sein, der den Arbeitsprozeß nach Erreichen der eingestellten Tiefe abstellt. An der unteren Seite der Stößelplatte 4 ist das dreidimensionale Formschleifwerkzeug 5 befestigt. Das Formschleifwerkzeug hat die Raumform, die das Werkstück 9 nach der Bearbeitung haben soll. Das Werkstück oder die Werkstück-Elektrode 9 besteht im vorliegenden Beispiel aus dem Material Graphit und ist in Blockform auf dem Arbeitstisch 10 befestigt. Die Werkstück-Elektrode 9 kann auch aus einem anderen Material, wie z.B. Metalle oder deren Legierungen oder aus isolierendem Material wie z.B. Holz bestehen. Das isolierende Material muß mit einer elektrisch leitenden Schicht versehen werden. Wesentlich ist die elektrische Leitfähigkeit des Materials, wenn die fertige Elektrode 9 für die elektroerosive bzw. elektrochemische Bearbeitung verwendet werden soll. Der Arbeitstisch 10 ist mit zwei Exzenterantrieben 11 verbunden, die den Arbeitstisch und das Werkstück 9 in die planetäre bzw. orbitale oder kreisende Bewegung bringen. Die Bewegung findet in den X- und Y-Koordinaten statt. Der Exzenterantrieb wird später im Zusammenhang mit den Figuren 2 und 3 näher beschrieben. Das Bedienpult 7 enthält eine größere Anzahl von Bedienungsorganen. Die Bedienungsperson kann mit diesen Organen die elektronische NC-Steuerung 12, die Hydraulikanlage 13, das Spül- und Filter-Aggregat 14 und die Antriebsmotoren, die im Maschinenuntergestell 15 angeordnet sind, betätigen oder ausschalten. Es sei darauf hingewiesen, daß die Bedienungsperson nur in ganz seltenen Fällen in den Ablauf des Arbeitsprozesses eingreift. Normalerweise erfolgt die Bearbeitung vollautomatisch, was später noch näher beschrieben wird. Der Arbeitsprozeß beginnt damit, daß die elektronische NC-Steuerung 12 über die Hydraulikanlage 13 die Stößelplatte 4 mit dem Formschleifwerkzeug 5 in Richtung Werkstück 9 absenkt. Gleichzeitig werden die beiden Exzenter-Antriebe 11 von der NC-Steuerung 12 in Betrieb gesetzt. Sie treiben den Arbeitstisch 10 und das Werkstück 9 in eine kreisende Bewegung. Der Betrag der Exzentrizität wird von der NC-Steuerung bestimmt. Dies wird später näher erläutert. Das Werkstück erhält durch diese Bewegung zum Formschleifwerkzeug 5 die gewünschte Raumform. Im Laufe der Bearbeitung bewegt sich das Werkzeug 5 mit einer bestimmten Vorschubgeschwindigkeit immer mehr in das Werkstück 9 hinein. Ein Schleifmittel sorgt für den richtigen Schleifvorgang. Das Schleifmittel kann in der Fläche des Werkzeugs 5 eingearbeitet sein oder im Spalt zwischen Werkstück und Werkzeug angeordnet sein.

Das Schleifmittel kann auch mit der Spülflüssigkeit in den Spalt transportiert werden. Die Spülflüssigkeit wird während des gesamten Arbeitsprozesses im Aggregat 14 aufbereitet und über Schläuche an den Arbeitstisch 10 transportiert. Das Werkstück 9, das vor dem Schleifprozeß mit mindestens einem, aber vorzugsweise mit einer Vielzahl von Spülkanälen versehen wurde, ist so am Arbeitstisch 10 befestigt, daß die vom Filter- und Spül-Aggregat 14 gelieferte Spülflüssigkeit in den Spalt gelangt. Wahlweise können Werkzeug 5 und/oder Werkstück 9 mit Spülkanälen versehen werden.

In der Figur 1 ist die Raumform des Werkzeugs 5 sehr einfach dargestellt. Dies soll nur zur allgemeinen Illustration dienen. In Wirklichkeit sind die Flächen bzw. ist die Raumform wesentlich komplizierter.

Während des Schleifvorganges besteht die Notwendigkeit, daß das Material, das abgeschliffen worden ist, entfernt werden muß, da es den Schleifvorgang nur behindert. Zur Entfernung dieses Materials wird in bestimmten zeitlichen Abschnitten bzw. Intervallen die Stößelplatte 4 mit dem Werkzeug 5 abgehoben. Die Spülflüssigkeit entfernt nun das abgeschliffene Material. Nach kurzer Zeit bewegt sich die Stößelplatte 4 mit dem Werkzeug 5 in Richtung Werkstück 9 und bearbeitet es mit der normalen Vorschubgeschwindigkeit weiter. Da die Abhebe- und Zustell-Bewegung eine viel größere Geschwindigkeit hat als die normale Vorschub-Bewegung, werden besondere Vorkehrungen getroffen, daß der Beschleunigungsvorgang und der Abbremsvorgang nicht abrupt stattfinden sondern dynamisch gesteuert werden. Dies wird später im Zusammenhang mit der Figur 5 näher erklärt. Ferner muß dafür Sorge getragen werden, daß die Geschwindigkeit der Abhebe- und Zustell-Bewegung des Werkzeugs 5 so gewählt wird, daß das abgeschliffene Material vorzugsweise vollkommen entfernt wird. Dabei darf aber keine Beschädigung am Werkstück 9 entstehen, das im vorliegenden Ausführungsbeispiel aus dem Material Graphit besteht. Im Folgenden sei diese Problematik an zwei Beispielen kurz erläutert. Zuerst sei angenommen, daß das Formschleifwerkzeug 5 noch nicht tief in das Werkstück eingedrungen sei. Die Abhebe-Bewegung bewirkt, daß das abgeschliffene Material zusammen mit der Spülflüssigkeit aufgewirbelt und entfernt wird. Das Werkzeug 5 wird anschließend mit der hohen Zustell-Geschwindigkeit zum Werkstück 9 bewegt. Wenn die Fläche vom Werkzeug und Werkstück sehr nahe sind, baut sich plötzlich ein hoher Druck der Spülflüssigkeit auf, der irgendwelche Reste von abgeschliffenem Material entfernt. Als zweites Beispiel sei angenommen, daß das Werkzeug 5 schon sehr tief in das Werkstück 9 eingedrungen ist. Bei der Intervall-Abhebe-Bewegung muß nun Sorge getragen werden, daß die Geschwindigkeit so ist, damit die komplizierten Flächen nicht beschädigt werden und dennoch das abgeschliffene Material entfernt wird. In der Praxis ist dies mit der Abhebebewegung allein nicht möglich. Daher wird die anschließende Zustellbewegung des Werkzeugs 5 in Richtung Werkstück 9 dazu benutzt, den restlichen Teil des abgeschliffenen Materials vollkommen zu entfernen. Dies kann z.B. dadurch bewerkstelligt werden, daß mit einer erhöhten Geschwindigkeit zugestellt wird. Der Druck baut sich sehr schnell in der Spülflüssigkeit auf. Im Gegensatz hierzu kann auch mit einer geringeren Geschwindigkeit zugestellt werden. Dann baut sich der Druck nicht so schnell in der Spülflüssigkeit auf. Die Wahl der Geschwindigkeit der Zustell-Bewegung des Werkzeugs 5 ist abhängig von der Kompliziertheit und Verletzlichkeit der dreidimensionalen Flächen. Dies wird durch die NC-Steuerung 12 bewerkstelligt.

Während des gesamten Schleifvorganges kann die Notwendigkeit eintreten, daß die Exzentrizität der planetären Bewegung des Werkstücks 9 in den X- und Y-Koordinaten geändert werden muß. Dies erfolgt durch die in den Figuren 2 und 3 gezeigten Ausführungsbeispiele.

Wenn gemäß Figur 1 das Formschleifwerkzeug 5 genügend tief in das Graphit-Werkstück 9 eingedrungen ist, so stellt das Tiefenendmaß 2, das mit einem Gegenkontakt in Berührung kommt, den gesamten Arbeitsprozeß ab.

Abschließend sei noch erwähnt, daß die Kraft, mit der das Werkzeug 5 gegen das Werkstück 9 gedrückt wird, den Verhältnissen im Schleifspalt 46 angepaßt wird. Bekanntlich ändern sich mit Fortschreiten des Schleifens die Verhältnisse im Spalt. Dies hängt damit zusammen, daß die Größe der in Eingriff stehenden Flächen sich ändert. Damit der gesamte Schleifprozeß innerhalb einer vernünftigen Zeit durchgeführt werden kann, muß die Anpreßkraft angepaßt werden. Dies geschieht auf zweierlei Weisen. Die NC-Steuerung 12 wird nach dem Tiefenmaß (Z-Achse) oder nach der Zeit bzw. Geschwindigkeit programmiert. In der Nähe des Arbeitstisches 10 ist ein Sensor installiert, der z.B. auf die Durchflußmenge der Spülflüssigkeit zwischen dem Spül- und Filter-Aggregat 14 und dem Arbeitstisch 10 anspricht. Dieser Sensor beeinflußt entsprechend den Änderungen der Durchflußmenge die NC-Steuerung 12. Der Sensor muß nicht immer vorhanden sein. Im Folgenden sei angenommen, daß nur das Programm auf Tiefenmaß oder Arbeitszeit die Anpassung der Anpreßkraft zwischen Werkzeug 5 und Werkstück 9 vornimmt. Die herzustellende Raumform ist bekannt. Daher weiß man auch die ungefähre Größe der in Eingriff stehenden Flächen in Abhängigkeit der Tiefe (Z-Achse) oder der Bearbeitungszeit bei einer bestimmten Bearbeitungsgeschwindigkeit. Entsprechend der voraus berechneten Änderung der in Eingriff stehenden Flächengröße kann die Anpreßkraft geändert werden. Wenn der Sensor noch zusätzlich oder allein benutzt wird, kann der NC-Steuerung 12 mitgeteilt werden, daß die vorgeschriebene Tiefe in der gewünschten Zeit oder die gewünschte Tiefe in der vorgegebenen Zeit nicht erreicht wurde. Die NC-Steuerung 12 kann in diesem Fall die Anpreßkraft erhöhen und den Schleifprozeß beschleunigen. Hierbei muß aber die Kompliziertheit und Verletzlichkeit der Fläche berücksichtigt werden. Daher empfiehlt es sich, einen oberen Grenzwert der Anpreßkraft festzulegen. Dies kann z.B. in der NC-Steuerung 12 für jede Größe der in Eingriff stehenden Flächen programmiert werden.

Die Figur 2 zeigt im Schnitt einen der beiden Exzenterantriebe 11. Es handelt sich hier um den linken Antrieb der Figur 1. Da beide Antriebe identisch sind wird im Folgenden nur dieser linke Antrieb erklärt. Der Antrieb besteht aus dem Gehäuse 16, in welchem über die Lager 17 eine Hülse 18 drehbar um ihre Achse 19 gelagert ist. Das Gehäuse 16 des Exzenterantriebs ist am Träger 49 befestigt. Am gleichen Träger ist auch der rechte Exzenterantrieb angebracht. Jeder Exzenterantrieb hat die gleiche Länge, die z.B. 30 cm beträgt. Die Hülse 18 wird durch einen nicht gezeichneten Elektromotor, der sich im Maschinenuntergestell 15 befindet, in Drehbewegung versetzt. Dies erfolgt über den Antriebsriemen 20 und Treibrad 21. Der Antriebsriemen 20 kann vorzugsweise ein Gummiriemen mit Innenzähnen oder eine Kette sein. Das Antriebsrad 21 hat entsprechende Vertiefungen oder Zähne. Die Geschwindigkeit des Antriebsmotors kann je nach den gewünschten Verhältnissen geändert werden. Dies stellt entweder die Bedienungsperson am Bedienpult 7 oder die NC-Steuerung 12 ein. In der Hülse 18 ist die Welle 22 drehbar gelagert. Die Figur 2 zeigt die Anordnung der Welle 22 außerhalb der Drehachse 19 der Hülse 18. Die Drehachse 23 der Welle 22 ist einige Millimeter nach links von der Drehachse 19 der Hülse 18 versetzt. Die Welle 22 ist an ihrem oberen Ende zu einem Flansch 24 ausgebildet. Der Flansch 24 steht mit der Hülse 18 über Verzahnung 25 in Verbindung. Diese Verzahnung ist in der Figur 3 detailliert dargestellt. Sie besteht aus dem oberen Zahnkranz 26, der am Flansch 24 befestigt ist, und aus dem unteren Zahnkranz 27, der an der Hülse 18 befestigt ist. Beide Zahnkränze greifen ineinander und können voneinander getrennt werden. Der Flansch 24 hat auf der dem Arbeitstisch 10 zugewandten Seite einen Kurbeltrieb 29. Wie Figur 2 zeigt ist der Kurbeltrieb nicht mittig in der Achse 23 seiner Welle 22 angeordnet. Der Kurbeltrieb 29 ist durch entsprechende relative Drehung der Welle 22 zur Hülse 18 so gezeichnet, daß die Exzentrizität gleich Null ist. Im Folgenden wird dies noch näher erklärt werden. Wenn nun der Haupt-Antriebsmotor den Antrieb 20, 21 in Drehbewegung versetzt, dreht sich die Hülse 18, die über die Verzahnung 25 die Welle 22 mitnimmt. Da der Kurbeltrieb 29 keine Exzentrizität hat, bewegt der Arbeitstisch 10 sich nicht in eine kreisende oder orbitale bzw. planetäre Bewegung. In diesem Zusammenhang sei darauf hingewiesen, daß der rechte Exzenterantrieb 11, identisch ist, vom gleichen Haupt-Antriebsmotor angetrieben wird und die gleiche Exzentrizität gleich Null hat. Der Antrieb erfolgt vorzugsweise über den gleichen Antriebsriemen 20.

Im Folgenden wird die Einstellung einer gewünschten Exzentrizität beschrieben. Dies wird mit dem unteren Teil der Figur 2 bewerkstelligt. Die Kupplung 31 muß zu diesem Zweck in den Mitnehmer 32 eingekuppelt werden. Dieses Einkuppeln erfolgt in der Weise, daß der Hubzylinder 34, der in der Trägerkonstruktion 35 befestigt ist, seine Pinole 36 gegen den Anschlag des Verstellantriebrad 37 drückt. Die Welle 38, die in Hülse 39 drehbar und verschiebbar angeordnet ist und das Rad 37 des Verstellantriebs mit der Kupplung 31 verbindet, wird durch die Pinole 36 nach oben verschoben, sodaß das Rad 37 mit dem Mitnehmer 32 eingekuppelt ist. Die Hülse 39 ist in einem Träger 33 befestigt. Der Träger 33 und die Trägerkonstruktion 35 sind genau wie der Träger 49 feste Bestandteile des Maschinenuntergestells 15. Der obere Teil des Mitnehmers 32 enthält eine Ausnehmung mit einem Innen-Zahnkranz 40. Der untere Teil der Welle 22 ist zu einem Flansch ausgebildet. Dieser Flansch trägt auf seiner Seitenwand einen Außen-Zahnkranz 41, der mit dem Innen-Zahnkranz 40 in Eingriff steht. Die Pinole 36 bewegt den fest eingekuppelten Mitnehmer 32 bis zum Anschlag 42 nach oben. Die Welle 22 wird gegen die Kraft der Feder 43 nach oben verschoben. Durch dieses Verschieben werden die Zahnkränze 26, 27 der Verzahnung 25 voneinander getrennt, sodaß zwischen der Hülse 18 und der Welle 22 keine starre Verbindung mehr besteht. Nun kann die gewünschte Exzentrizität eingestellt werden. Ein nicht gezeichneter Elektromotor z.B. Schrittmotor, der auch im Maschinenuntergestell 15 vorgesehen ist, treibt über den Riemen 45, der mit beiden Exzenterantrieben 11 verbunden ist, die Antriebsräder 37 an. Die Welle 22 dreht sich relativ zur Hülse 18, über die Zahnkränze 40, 41, Mitnehmer 32, Kupplung 31, Welle 38 und Antriebsrad 37. Der Verstellantrieb 37 und 45 ist nur solange im Betrieb bis die gewünschte Exzentrizität durch Drehung des Kurbelzapfens 29 am Arbeitstisch 10 eingestellt ist. Hierzu wird eine Zeit benötigt, die zwischen 1–5 Sekunden liegt. Anschließend fährt die Pinole 3 in ihre Ausgangsposition zurück. Der Verstellantrieb 37, 45 und die Kupplung 31 folgen dieser Bewegung. Die Welle 22 bewegt sich unter der Kraft der Feder 43 in ihre Anfangsposition und rastet über die Verzahnung 25 mit der Hülse 18 ein. Der beschriebene Vorgang der Verstellung der Exzentrizität der beiden Exzenterantriebe 11 wird entweder vom Bedienpult 7 durch die Bedienungsperson oder von der NC-Steuerung 12 durch ein Programm gesteuert. Der Betrag der eingestellten Exzentrizität wird durch einen Sensor 50 erfaßt, der am oberen Zahnkranz 26 der Verzahnung 25 angeordnet ist (Figur 3). An Stelle des Sensors 50 kann auch ein Schrittmotor verwendet werden, der als Antriebsmotor zum Einstellen der Exzentrizität benutzt wird. Dieser Betrag wird auf ein Anzeigegerät im Bedienpult 7 oder in die NC-Steuerung 12 gegeben. Der Hauptantrieb 20, 21 wird wieder gestartet. Der Arbeitstisch 10 führt nun die planetäre Bewegung mit der eingestellten Exzentrizität aus. Wenn die herzustellende Raumform am Werkstück 9 weitere Verstellungen der Exzentrizität verlangt, kann dies ohne weiteres so durchgeführt werden wie es beschrieben wurde.

Da bei der planetären Bewegung des Arbeitstisches 10 oft große Massen (Gewichte) bewegt werden, besteht die Forderung zu einem Massenausgleich. Dies kann dadurch bewerkstelligt werden, daß unter dem Arbeitstisch 10 mindestens ein dritter Exzenterantrieb angeordnet ist, dessen Kurbeltrieb 29 Gegengewichte in planetäre Bewegungen versetzt. Der dritte Exzenterantrieb ist mit den beiden beschriebenen Antrieben 11 identisch. Der Hauptantrieb 20, 21, der für die Drehbewegung der Hülse 18 verantwortlich ist, und der Verstellantrieb 37, 45, der für Einstellung der Exzentrizität verantwortlich ist, sind identisch. Der dritte Exzenterantrieb wird auch von den gleichen Motoren angetrieben. Der einzige Unterschied des dritten Exzenterantriebes besteht darin, daß der Hauptantrieb 20, 21 und der Verstellantrieb 37, 45 in umgekehrter Richtung bewegt werden. Dies kann dadurch bewerkstelligt werden, daß die Treibräder 21 und 37 in umgekehrter Weise an die Riemen bzw. Ketten 20, 45 angelegt werden. Wesentlich ist, daß der dritte Exzenterantrieb die Gegengewichte in umgekehrter Richtung zur planetären Bewegung des Arbeitstisches 10 bewegt. In einigen Fällen können die Gewichte bzw. Massen des Arbeitstisches 10 wesentlich größer sein als die Gegengewichte. Dann wird mit dem dritten Exzenterantrieb eine größere Exzentrizität für die kleineren Gegengewichte eingestellt als für den Arbeitstisch 10 mit den beiden Exzenterantrieben 11. Zum Beispiel stellt man mit dem dritten Exzenterantrieb ein um den Faktor 10 größeren Radius ein. Der dritte Exzenterantrieb wird selbstverständlich auch vom Bedienpult 7 oder von der NC-Steuerung 12 gesteuert.

Die Figur 3 zeigt die Verzahnung 25. Der obere Zahnkranz 26, der an der unteren Seite des Flansches 24 angebracht ist, und der untere Zahnkranz 27, der auf der Hülse 18 angebracht ist, sind normalerweise miteinander im Eingriff. Nur während der Verstellung der Exzentrizität sind die beiden Zahnkränze getrennt. Im vorliegenden Beispiel hat jeder Zahnkranz 180 Zähne. Dies bedeutet eine Winkelverdrehung von 2° pro Zahn. Dies entspricht einer durchschnittlichen Exzentrizitätsverstellung von 0,1 mm. Selbstverständlich können diese Werte durch entsprechende konstruktive Maßnahmen verkleinert oder vergrößert werden. Der obere Zahnkranz 26 trägt eine Scheibe 28 mit Strichmarken 29. Die Scheibe 28 kann auch am Außenrand des Flansches 24 befestigt sein. Bei der Verstellung der Exzentrizität macht diese Scheibe die Drehung des Flansches 24 mit. Ein Sensor 50 tastet die an ihm vorbeilaufenden Strichmarken 29 ab und gibt die entsprechenden elektrischen Signale über die Leitungen 51 auf das Anzeigegerät im Bedienpult 7 oder in die NC-Steuerung 12. Die Strichmarken 29 können optisch abgetastet werden. Dann besteht die Scheibe aus Glasmaterial mit schwarzen Strichen 29. Der Sensor 50 hat zwei Lichtschranken, die in einem bestimmten Abstand zueinander angeordnet sind. Hierdurch werden sowohl die Richtung als auch der Betrag der Exzenter-Verstellung detektiert. Die entsprechenden elektrischen Signale sind auf den Leitungen 51 entweder in analoger oder digitaler Form vorhanden. Bei magnetischer Abtastung der Marken 29 besteht die Scheibe 28 aus magnetisch nicht leitendem Material. Der Sensor 50 hat zwei magnetische Abtastvorrichtungen, die die Richtung und den Betrag der Exzenter-Verstellung als Signale auf den Leitungen 51 bekannt geben. Mit einem anderen Sensor kann die Abtastung auch mechanisch oder elektrisch erfolgen. Solche Sensoren sind bekannt, sodaß nicht näher darauf eingegangen wird.

Abschließend wird erwähnt, daß die planetäre Bewegung nicht nur mit dem Beispiel der Figur 2 sondern auch mit einem Kreuztisch erzeugt werden kann. Bekanntlich muß der eine Tisch Sinus-Bewegungen und der andere Tisch Cosinus-Bewegungen ausführen. Die Überlagerung beider Bewegungen ergibt die planetäre Bewegung.

Die Figur 4 zeigt die hydraulische Anlage 13, mit der die Vorschub-Bewegung des Schleifwerkzeugs 5 und seine in bestimmten Zeiten stattfindende Abhebe- und Zustell-Bewegung bewerkstelligt werden. Das 4/3-Wegeventil 55 ist über Leitung 52 mit der Pumpe 56 verbunden, die das für die Hydraulikanlage benötigte Druckmedium, z.B. Öl, liefert und gemäß den Vorschubverhältnissen unterschiedliche Fördermengen liefern kann. Vorschubgeschwindigkeit und Fördermenge der Pumpe stehen je nach Vorwahl von 55 in einem festen Verhältnis. Die Rückflußleitung 53 des Ventils 55 ist mit dem Reservoir 57 verbunden, aus dem die Pumpe 56 ihr Öl bezieht. Das Ventil 55 enthält die beiden Elektromagnete 58, 59, die von der NC-Steuerung 12 über Leitungen 121, 125 betätigt werden. An beiden Enden des Ventils 55 ist ein Symbol für die Ventilfedern (Rückstellfedern) gezeichnet. Hinter dem 4/3-Wegeventil 55 liegt ein Proportionalventil 60, das nahe beim Arbeitszylinder 1 der Formschleifmaschine angeordnet ist. Auf kurze Verbindungsleitungen 63, 64 zum Arbeitszylinder 1 ist großer Wert gelegt.

Zur Erklärung der Wirkungsweise der Figur 4 sei nun angenommen, daß das Werkzeug 5, das bekanntlich an der Stößelplatte 4 der Pinole 3 befestigt ist, in Richtung Werkstück 9 und Arbeitstisch 10 bewegt werden soll. Es handelt sich um die Vorschubbewegung und die schnelle Zustellbewegung. Für den Vorschub abwärts wird Magnet 58 am Ventil 55 angewählt; die Schnellzustellung wird ohne Vorwahl an Ventil 55 nur mit Signal 123 gesteuert und Freigabe 124 abgesichert. Die anderen Bewegungen werden später diskutiert. Für die Vorschubbewegung betägtigt die NC-Steuerung 12 den Elektromagneten 58, so daß das Ventil 55 die Leitung 52 von der Pumpe 56 mit der Leitung 61 zum Proportionalventil 60 und die Rückleitung 62 vom Proportionalventil mit der Druckleitung 61 verbindet. Die NC-Steuerung 12 beeinflußt über Leitung 123, Komparator 76, Verstärker 77, Schalter 78 des Proportionalreglers 75 den Elektromagneten 65 des Proportionalventils 60 so, daß die Druckleitungen 61, 64 miteinander verbunden sind. Das Druckmedium, z.B. Öl, gelangt nun von der Förderpumpe 56 über die Druckleitungen 52, 61, 64 in den oberen Raum des Arbeitszylinders 1, so daß sich der Kolben 111 der Pinole 3 nach unten bewegt. Hierdurch fließt das Öl aus dem unteren Raum des Arbeitszylinders 1 über die Rückflußleitungen 63, 62. Die Kolbenfläche des unteren Raums ist wesentlich kleiner als die des oberen Raums. Dies geschieht aus dem Grund, damit die Förderpumpe 56 eine geringere Ölmenge fördern muß. Im Ventil 55 wird das rückfließende Öl wieder in die Druckleitung 61 eingeführt. In der Rückflußleitung 63 befindet sich ein Sperrventil 67, das den Ölfluß aus dem unteren Raum des Arbeitszylinders 1 sperrt. Im vorliegenden Fall kann das Öl nur über die Drossel 66 fließen, die einen so hohen Druck aufbaut, daß der Stößel 3 und der Kolben 111 mit einer sehr kleinen Geschwindigkeit das Werkzeug 5 zum Werkstück 9 bewegt. Soll diese Geschwindigkeit vergrößert werden, so geschieht dies über Ventil 68, welches nach Überschreiten eines bestimmten Druckes öffnet und dadurch einen Bypass zur Drossel 66 bildet. Die Figur 4 zeigt in der Nähe des Werkzeugs 5 und Arbeitstisch 10 mit Werkstück 9 zwei Boxen 70, 71. Sie sollen symbolisch Meßgeräte darstellen. Das Meßgerät 70 soll ein Kraftmesser sein, der die Anpreßkraft F zwischen dem Werkzeug 5 und dem Werkstück 9 mißt und ein Spannungssignal U (analog oder digital) über Leitung 73 in die NC-Steuerung 12 gibt. Das Meßgerät 71 soll ein Wegmesser sein, der den Weg Z mißt, den das Werkzeug 5 in der Z-Koordinate zurücklegt.

Der Wegmesser 71 erzeugt elektrische Impulse, die über Leitung 72 in die NC-Steuerung 12 gegeben werden. Diese Impulse enthalten die Information über die Richtung der Bewegungen und die momentane Stellung des Werkzeugs. Der Weg Z kann z.B. durch das Meßgerät 1 der Figur 1 detektiert werden. Die beiden Meßgeräte 70, 71 haben ihre Sensoren an den für sie günstigsten Orten angeordnet.

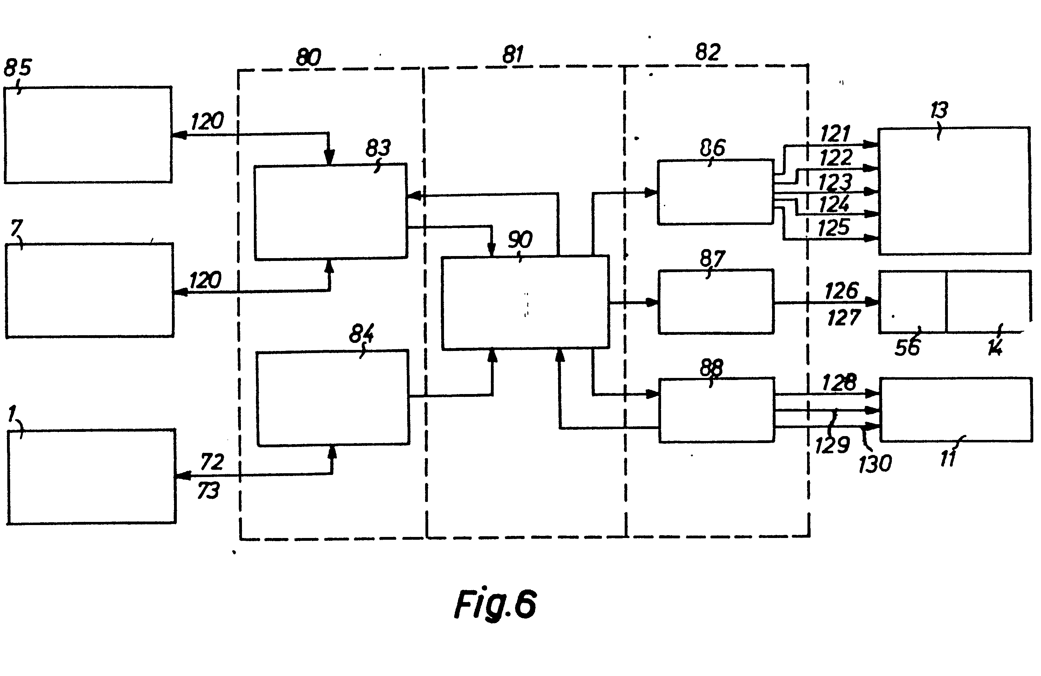

Der in der Figur 4 dargestellte Proportionalregler 75 enthält einen Komparator 76, der die SOLLwert-Signale für Vorschubgeschwindigkeit (NC-Steuerung 12, Leitung 123) mit den ISTwert-Signalen des Meßorgans 69 vergleicht. Das Meßorgan 69 detektiert die wirkliche Stellung des Steuerschiebers im Proportionalventil 60. Bei einer Differenz zwischen den beiden elektrischen Signalen erzeugt der Komparator 76 ein elektrisches Differenzsignal, das über den Verstärker 77 mit einstellbarem Verstärkungsgrad, Schalter 78 zum Elektromagneten 65 gegeben wird und den Steuerschieber im Proportionalventil 60 solange bewegt bis die gewünschte Ventilstellung, die in der NC-Steuerung 12 programmiert ist, eingestellt ist. Der Proportionalregler 75 macht den Steuerschieber des Ventils 60 unempfindlich gegen statische und dynamische Störkräfte, so daß die Bewegung zwischen Werkzeug 5 und Werkstück 9 sehr genau nach den in der NC-Steuerung 12 programmierten Werten gesteuert wird. Die NC-Steuerung 12 verarbeitet auch die ISTwert-Signale der Meßgeräte 70, 71. Die Anpassung erfolgt in jedem Augenblick der Vorschubbewegung, der intervallmäßigen Zustell-Rückzugbewegung und während der dynamisch gesteuerten Übergänge zwischen den einzelnen Bewegungstypen. Ferner erfolgt die Anpassung, wenn während des Schleifvorganges die in Eingriff stehenden Flächen zwischen Werkzeug 5 und Werkstück 9 größer werden. Die Anpassungsvorgänge werden später im Zusammenhang mit den Figuren 6, 7, 8 näher beschrieben. Der Proportionalregler 75 ist nur dann in Betrieb, wenn ein sogenanntes «Freigabe» (enable) Signal zusätzlich auf der Leitung 124 vorhanden ist. Durch diese Maßnahme wird sichergestellt, daß der Kolben 111 keine ungewollten Bewegungen im Arbeitszylinder 1 macht. Wenn kein Freigabesignal vorhanden ist, befindet sich der Schalter 78 in der gezeichneten Ruhestellung. Der Proportionalregler 75 ist nun nicht in Betrieb. Der Steuerschieber des Proportionalventils 60 wird durch die Rückstellfeder, deren Symbol oberhalb des Ventils in der Figur 4 gezeichnet ist, zurückgestellt, sodaß der Kolben 111 keine Bewegungen ausführen kann.

Die Figur 4 zeigt zwischen der Druckleitung 52 der Pumpe 56 und der Rückflußleitung 53 zum Reservoir 57 ein zweites Proportionalventil 54, das über Leitung 122 von der NC-Steuerung 12 elektrisch angesteuert wird. Mit diesem Proportionalventil kann der Maximaldruck für die gesamte Hydraulikanlage geändert werden. Druckerniedrigung erfolgt durch Vermindern der Federvorspannung 54, so daß ein Teil des Öls aus der Druckleitung 52 in die Rückflußleitung 53 fließt. Ein höherer Druck der Pumpe 56 wird erreicht durch Erhöhen der Federvorspannung über den Magnet am Ventil 54. Die NC-Steuerung 12 bestimmt über Leitung 122 den Betrag der Druckänderung. Die NC-Steuerung 12 wird über den Datenbus 120 mit dem Programm über die Schleifarbeit einschließlich den verschiedenen Bewegungstypen zwischen Werkzeug 5 und Werkstück 9 versorgt. Wenn z.B. innerhalb einer vorgegebenen Zeit $t_2$ der vorgegebene Schleifweg $Z_2$ (Fig. 5) nicht erreicht wurde, wird der Druck in bestimmter Weise erhöht, sodaß der Schleifprozeß beschleunigt wird. Die Beschleunigung wird jedoch unter Berücksichtigung der Verletzlichkeit der Materialien von Werkzeug 5 und Werkstück 9 eingestellt. Der Druck wird durch das Proportionalventil 54 erniedrigt, wenn das Werkzeug 5 den vorgegebenen Schleifweg $Z_2$ schneller als in der vorbestimmten Zeit $t_2$ zurückgelegt hat.

Wenn nun im Programm, das der NC-Steuerung 12 über den Datenbus 120 eingegeben worden ist, eine Entfernung des Werkzeugs 5 vom Werkstück 9 vorgesehen ist, so wird das 4/3-Wegeventil 55 über Leitung 125 angesteuert. Der Elektromagnet 59 bewegt den Steuerschieber im Ventil 55 so, daß die Druckleitung 52 der Förderpumpe 56 mit der Leitung 62 verbunden wird. Die Leitung 61 wird mit der Rückleitung 53 verbunden, die zum Reservoir 57 führt. Ferner werden über Leitung 123 der Proportionalregler 75 und das Proportionalventil 60 angesteuert. Der Elektromagnet 65 bewegt den Steuerschieber im Ventil 60 so, daß die Förderpumpe 56 über Druckleitungen 52, 62, 63, Ventil 67, das in der Durchflußrichtung kein Sperrventil ist, Öl in den unteren Raum des Zylinders 1 pumpt. Aus dem oberen Raum des Zylinders 1 gelangt das Öl über Leitungen 64, 61, 53 in das Reservoir 57. Das Werkzeug 5 bewegt sich nun mit kleiner Geschwindigkeit vom Werkstück 9 fort.

Anhand der Figur 4 wurden bisher die Bewegungen des Werkzeugs 5 besprochen, die mit geringer Geschwindigkeit vom oder zum Werkstück 9 durchgeführt werden.

Nun müssen auch intervallmäßige Bewegungen mit sehr viel höherer Geschwindigkeit durchgeführt werden, die in bestimmten Zeiten, z.B. zwischen 1 Sekunde und 120 Sekunden liegen können. Diese intervallmäßigen Bewegungen bestehen aus einem schnellen Abheben des Werkzeugs 5 vom Werkstück 9 und einem schnellen Zustellen des Werkzeugs 5 zum Werkstück 9. An dieser Stelle sei darauf hingewiesen, daß die schnelle Abhebe- und Zustell-Bewegung nicht plötzlich auftreten darf, da sonst Flächenteile des Werkstücks 9 beschädigt werden können. Dieser Nachteil der bekannten Anlagen ist dadurch zu erklären, daß z.B. bei einer schnellen Abhebebewegung des Werkzeugs 5 vom Werkstück 9 ein Vakuum im Spalt gebildet wird, da die Spülflüssigkeit aus dem Spülaggregat 14 nicht schnell genug nachfließen kann. Ein solches Vakuum führt dazu, daß der Kolben 111 und Stößel 3 im Arbeitszylinder 1 mit großer Kraft nach oben bewegt werden müssen, was Beschädigungen an den Flächen hervorruft. Außerdem erzeugen solche plötzlichen Änderungen der Bewegungsabläufe dynamische Störungen wie z.B. starke Schläge und Stöße im gesamten System. Dies kann die hohe Präzision der einjustierten Konstruktionsteile verschlechtern. Das Gleiche gilt auch, wenn das Werkzeug 5 mit großer Geschwindigkeit zum Werkstück 9 bewegt wird und plötzlich stehen bleibt. Hier baut sich plötzlich ein hoher Druck auf, da die Spülflüssigkeit in dem sich verengenden Spalt sehr schnell komprimiert wird und das Spülaggregat 14 nicht in der Lage ist, Gegenmaßnahmen einzuleiten wie z.B. schnelleres Absaugen und Verringerung der Menge der Spülflüssigkeit. Auch in diesem Fall ergeben sich starke Schläge und Stöße im System.

Da die intervallmäßigen Bewegungen zum Entfernen des abgeschliffenen Materials aus dem Schleifspalt 46 unumgänglich notwendig sind, vermeidet die Erfindung die genannten Nachteile der unerwünschten Schläge und Stöße. Schläge und Stöße werden durch das Ausführungsbeispiel der Figur 4 vermieden. Die nachteiligen, plötzlichen Druckänderungen der Spülflüssigkeit werden durch ein Ausgleichgefäß 170 eliminiert, das gemäß Figur 9 in der Flüssigkeitsleitung 171 zwischen dem Spülaggregat 14 und dem Werkzeug 5 bzw. Werkstück 9 angeordnet ist. Die Spülflüssigkeit steht in der Leitung 171 unter Druck, der durch die Förderpumpe im Spülaggregat 14 erzeugt wird. Das Ausgleichgefäß 170 ist in der Mitte durch eine elastische Membrane 172 in die beiden Räume 173, 174 unterteilt. Der obere Raum 173 enthält Luft und ist abgedichtet. In den unteren Raum 174 gelangt die Spülflüssigkeit. Bei plötzlicher Druckerhöhung im Schleifspalt 46, die durch schnelles Bewegen des Werkzeuges 5 zum Werkstück 9 entsteht, weicht die Spülflüssigkeit in den unteren Raum 174 des Ausgleichgefäßes 170 aus. Hierdurch wird die plötzliche Druckerhöhung im Schleifspalt 46 vermieden. Bildet sich im Schleifspalt 46 eine Druckverminderung aus (Werkzeug 5 bewegt sich vom Werkstück 9 fort), so fließt genügend Spülflüssigkeit aus dem unter Druck stehenden Raum 174 in den Schleifspalt 46 und zwar zusätzlich zu der von der Pumpe im Aggregat 14 geförderten Spülflüssigkeit. Der Luftdruck im oberen Raum 173 unterstützt diesen Vorgang. Hierdurch wird in diesem Fall eine schädliche Druckverminderung im Schleifspalt 46 vermieden, und die Spülung läuft in kürzerer Zeit und mit größerer Menge an Spülflüssigkeit ab, sodaß die Pumpe und die Leitungen im gesamten Spülkreis kleiner dimensioniert werden können. Das Ausgleichgefäß 170 der Figur 9 funktioniert auch ohne die Membrane 172.

Beim Ausführungsbeispiel der Figur 4 der Erfindung startet die NC-Steuerung 12 diese schnellen Intervall-Bewegungen über die Leitungen 121, 122, 123, 125. Die Ventile 54, 55, 60 steuern diese schnellen Bewegungen. Das Proportionalventil 60 ist so konstruiert, daß in Zusammenarbeit mit der NC-Steuerung 12 die Übergänge zwischen den intervallmäßigen Bewegungen (große Geschwindigkeit) und den Vorschub- und Rückzugsbewegungen (kleine Geschwindigkeit) sanft gestaltet werden. Die Hydraulikanlage ist also in der Lage, die sehr großen Unterschiede der Geschwindigkeitsänderungen auf ein vernünftiges Maß zu reduzieren. Hierdurch wird die Arbeitsgenauigkeit der Maschine erhöht.

Anhand der Figur 5 soll nun der Bewegungsablauf des Werkzeuges 5 unter Berücksichtigung der erfindungsgemäßen hydraulischen Anlage der Figur 4 näher erklärt werden. Auf der Abszisse der Figur 5 sind die Zeit t und auf der Ordinate der Weg Z aufgetragen. Es sei nun angenommen, daß das Werkzeug 5 mit großer Geschwindigkeit $V_1$ in Richtung Werkstück 9 bewegt wird. Der Weg, den das Werkzeug 5 bis zum Werkstück 9 zurücklegt, ist mit $Z_1$ bezeichnet. Der erste Teil $V_{1a}$ der Geschwindigkeit ist der gesteuerte Übergang (Beschleunigen) von der Geschwindigkeit «Null» zur großen Zustellgeschwindigkeit $V_1$. Wenn das Werkzeug 5 kurz vor dem Werkstück 9 sich befindet, erfolgt der gesteuerte Übergang (Bremsen) von der großen Zustellgeschwindigkeit $V_1$ zur Geschwindigkeit «Null». Dieser Teil ist mit $V_{1b}$ bezeichnet. Nach einer kurzen Zeit $t_1$ von ca. 0,1 Sekunde (Geschwindigkeit = 0) fährt das Werkzeug 5 mit der kleinen Vorschubgeschwindigkeit $V_2$. In dieser Zeit $t_2$ von ca. 1–30 Sekunden wird das Werkstück 9 geschliffen. Das Werkstück 9 führt die planetäre Bewegung aus. Die planetären Antriebe 11 der Figuren 1 und 2 setzen den Arbeitstisch 10 in Bewegung. Das Werkzeug 5 dringt hierbei um den Weg $Z_2$ in das Werkstück 9 ein. Auch bei der kleinen Vorschubgeschwindigkeit $V_2$ sind die gesteuerten Übergänge $V_{2a}$ (Beschleunigen) und $V_{2b}$ (Bremsen) vorgesehen. Nach einer kurzen Zeit $t_3$ von ca. 0,4 Sekunden wird das Werkzeug 5 mit der großen Geschwindigkeit $V_3$ vom Werkstück 9 abgehoben. Der hierbei zurückgelegte Weg $Z_3$ ist gleich lang wie der Zustellweg $Z_1$, aber um den Schleifweg $Z_2$ nach unten verschoben. Die Übergänge $V_{3a}$ (Beschleunigen) und $V_{3b}$ (Bremsen) sind auch hier vorhanden. Das Werkzeug 5 bleibt für eine kurze Zeit $t_4$ von ca. 0,5 Sekunden in der vom Werkstück 9 entferntesten Position (Geschwindigkeit = 0). Dann beginnt der nächste Zyklus. Der in der Figur 5 gezeigte Zyklus dauert eine Zeit, die zwischen 1 bis 60 Sekunden liegt. Die Anlage der Figur 4 sorgt dafür, daß die Geschwindigkeiten $V_1$, $V_2$, $V_3$ und ihre Übergänge $V_{1a}$, $V_{1b}$, $V_{2a}$, $V_{2b}$, $V_{3a}$, $V_{3b}$ den augenblicklichen Zuständen im Schleifspalt angepaßt werden. Dies gilt besonders für den Fall, wenn das Werkzeug 5 sich immer tiefer in das Werkstück 9 einarbeitet, und die in Eingriff stehenden Flächen größer werden. Die Geschwindigkeiten und ihre Übergänge werden geändert. Die Zeiten $t_1$, $t_2$, $t_3$, $t_4$ können z.B. so geändert werden, daß die Ruhezeiten entfallen und die Schleifzeit $t_2$ verlängert wird. Die Schleifzeit $t_2$ kann auch verkürzt werden. Die Dauer eines Zyklusses kann auch länger als 60 Sekunden gemacht werden. So folgt ein Zyklus dem anderen so lange, bis die Schleifarbeit beendet ist. Wie später im Zusammenhang mit den Figuren 6, 7, 8 noch näher erläutert wird, können die bei Erreichen der vorgeschriebenen Bearbeitungstiefe im Werkstück 9 (d.h. zum Zeitpunkt der Beendigung der Schleifarbeit) ein oder mehrere Zyklen $V_3$, $V_1$ ohne Vorschubbewegung $V_2$ wiederholt werden. Die Anzahl dieser sogenannten «Nachschleif»-Zyklen kann entweder fest programmiert oder abhängig von einem minimalen Wert des Anpeßdruckes im Schleifspalt gemacht werden. Dies wird durch die NC-Steuerung 12 bewerkstelligt. Der Vorteil dieser Zyklen liegt darin, daß die Genauigkeit der geschliffen räumlichen Abmessungen des Werkstücks 9 nach allen Seiten erhöht wird.

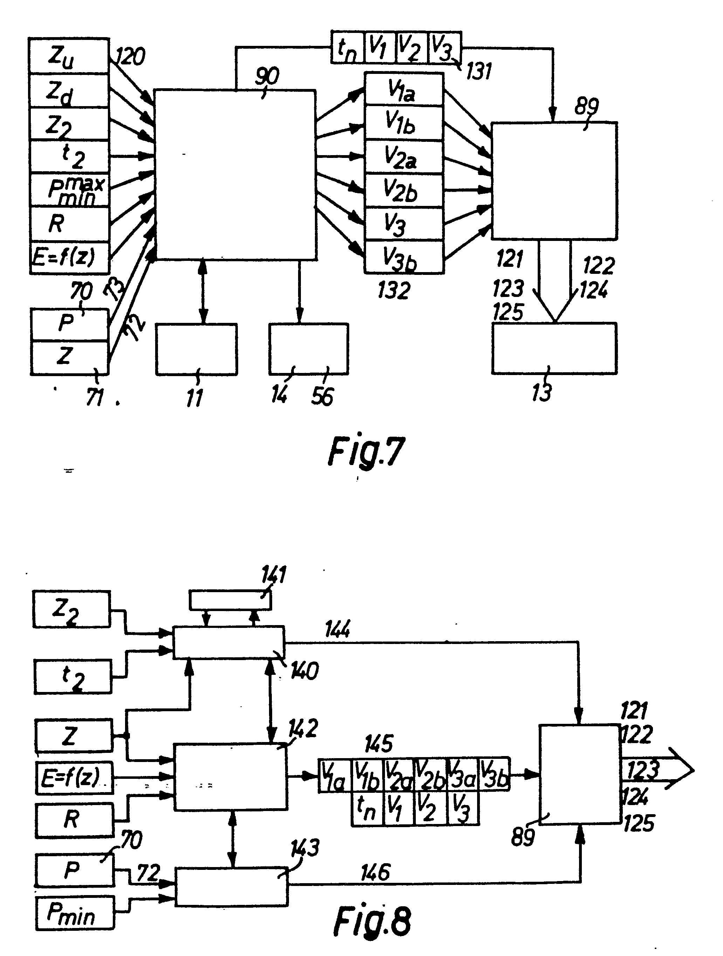

Die Figur 6 zeigt die einzelnen Bauteile der NC-Steuerung 12, die in Input-, Zentral-, Output- und Peripherieeinheiten eingeteilt sind. Die Bauteile als solche sind bekannt, so daß deren Funktionsweise nur soweit beschrieben wird, wie es für das Verständnis der Erfindung notwendig ist. Die Input-Einheit 80 enthält den Operation-Interface 83 und den Maschinen-Interface 84. Die Programmeingabe mit Speicher 85 und das Bedienpult 7 sind über den Datenbus 120 mit dem Operation-Interface 83 verbunden. Der Datenfluß im Datenbus 120 geht in beide Richtungen, was durch die Pfeile angedeutet ist. Wie bereits im Zusammenhang mit den Figuren 1 und 4 gesagt, ist das vollständige Programm für den gesamten Schleifprozeß des Werkstücks 9 in der Programmeingabe 85 eingespeichert (z.B. auf Magnetspeicher), und/oder das Programm kann wahlweise im Bedienpult 7 durch die Bedienungsperson eingegeben oder geändert werden. Die Bedienungsperson speichert die eingegebenen oder geänderten Daten in einem Speicher der Programmeingabe 85. Der Arbeitszylinder 1 ist mit dem Maschinen-Interface 84 über die Leitungen 72, 73 verbunden (Figuren 4, 6, 7). Die zum Programm gehörenden Daten gehen aus den Figuren 7, 8 hervor. Die beiden Interfaces 83, 84 geben die Daten in die zentrale Recheneinheit 90, in der sie unter Berücksichtigung der vorgegebenen Technologieregeln verarbeitet werden und als Ergebnisse in die Output-Einheit 82 gegeben werden. Die Pfeile der Verbindungsleitungen deuten den Datenfluß an, und in der Output-Einheit 82 sind soviele Interfaces 86, 87, 88 vorgesehen, wie periphere Stelleinheiten 13, 11, 14, 56 notwendig sind zur Steuerung des gesamten Schleifprozesses des Werkstückes 9. Die Hydraulikanlage 13 steht über die Leitungen 121, 122, 123, 124, 125 mit dem Interface 86 für die Steuerung der Ventile 54, 55, 60 und des Reglers 75 (Figur 4) in Verbindung. Das Hydraulik- und Spül-Interface 87 ist über Leitungen 126, 127 mit der Förderpumpe 56 der Hydraulikanlage 13 und mit der Förderpumpe des Spül- und Filteraggregates 14 verbunden. Der Antriebsmotor, der über die Antriebe 20, 21 die Exzenterantriebe 11 in die planetäre Bewegung (Figuren 1, 2) antreibt, wird vom Maschinen-Interface 88 über die Leitung 128 angesteuert. Der Verstellmotor, der über die Verstellantriebe 37, 45, die Exzentrizität der Exzenterantriebe 11 (Figuren 1, 2) verstellt, wird vom Maschinen-Interface 88 über die Leitung 129 angesteuert. Das gleiche Maschinen-Interface 88 der Figur 6 steuert über die Leitung 130 den Elektromagneten des Hubzylinders 34 an, der kurze Zeit vor der Verstellung der Exzentrizität die Kupplung 31 in den Mitnehmer 32 einkoppelt und nach eingestellter Exzentrizität wieder entkoppelt (Figur 2).

Die Figur 7 zeigt die Eingangsdaten, die für die Durchführung des gesamten Schleifprozesses am Werkstück 9 notwendig sind und in der Programmeingabe 85 entweder eingespeichert sind oder über das Bedienpult 7 durch die Bedienungsperson eingegeben werden. Die Grenzen der gesamten Bewegung des Werkzeugs 5 in der Z-Koordinate werden festgelegt. Die Werte $Z_u$ für die obere Grenze und $Z_d$ für die untere Grenze (Tiefen-Endmaß 2) werden eingegeben. Mit dem Wert $Z_2$ wird der Weg in mm angegeben, den das Werkzeug 5 während des Schleifens innerhalb eines Zyklusses in der Z-Koordinate zurücklegen soll. Der Wert $t_2$ gibt die Zeit in Sekunden an, die für das Schleifen mit der vorgegebenen Geschwindigkeit $V_2$ nicht überschritten werden darf (siehe auch Figur 5). Der Betrag $P_{min}$ ist der untere Grenzwert in $Kp/mm^2$, den der Anpreßdruck zwischen Werkzeug 5 und Werkstück 9 nicht unterschreiten sollte. Ferner ist dieser Betrag $P_{min}$ als untere Grenze für die planetären Leerlaufbewegungen des Werkstücks 9 gedacht, welche am Ende des gesamten Schleifprozesses ohne Vorschub in Z-Koordinate zur Erhöhung der Genauigkeit des Abbildes des Werkstück 9 solange vorgenommen werden, bis der Wert $P_{min}$ erreicht ist. Der Betrag $P_{max}$ ist der obere Grenzwert, den der Druck zwischen Werkzeug 5 und Werkstück 9 nicht überschreiten darf, da sonst ihre Flächen verletzt werden können. Mit dem Betrag R wird die Anzahl der Zyklen bzw. der Intervall-Bewegungen (Figur 5; Abheben $V_3$, Zustellen $V_1$) für den gesamten Schleifprozeß eingegeben. Mit $E = f(Z)$ wird die Exzentrizität als Funktion der Eindringtiefe des Werkzeugs 5 und des Werkstücks 9 (Z-Koordinate) eingegeben. Da man bei jeder Eindringtiefe Z weiß, wie viele Flächen des Werkzeugs 5 und des Werkstücks 9 miteinander in Eingriff stehen, läßt sich der Betrag der Exzentrizität E feststellen, mit dem die planetäre Bewegung des Werkstücks 9 in den X- und Y-Koordinaten durchgeführt werden soll. Zu jedem Betrag der Eindringtiefe Z gehört ein bestimmter Wert der Exzentrizität E. Diese Abhängigkeit zwischen Z und E kann in einem Graph als beliebige Kurve dargestellt werden. Vorzugsweise ist diese Abhängigkeit als eine Gerade oder als ein Kreisbogen darstellbar. Die bisher genannten technologischen Werte werden über den Datenbus 120 in die zentrale Recheneinheit 90 transportiert und dort verarbeitet. Das Meßgerät 70, das seinen Sensor am oder im Schleifspalt 46 oder in der Zuleitung 171 der Spülflüssigkeit vom Spülaggregat 14 zu den Spülkanälen im Werkstück 9 hat, gibt in jedem Augenblick die elektrischen Signale, die den IST-Druck P zwischen Werkzeug 5 und Werkstück 9 angeben, über die Leitung 73 zur zentralen Recheneinheit 90. Das Meßgerät 71, dessen Sensor z.B. am Tiefenmaß 2 (Figur 1) vorgesehen ist, gibt seine Information über die ISTPosition des Werkzeugs 5 in der Z-Koordinate als elektrische Impulse mittels Leitung 72 in die zentrale Recheneinheit 90.

In dieser Recheneinheit der Figur 6 werden sämtliche Eingangsdaten nach vorgegebenen Regeln verarbeitet. Dies wird im folgenden anhand der Figuren 1, 2, 5, 6, 7 erläutert. Der Antriebsmotor, der Verstellmotor und der Hubzylinder 34 der Exzenterantriebe 11 werden über die Leitungen 128, 129, 130 angesteuert. Die Förderpumpe 56 wird über Leitung 126 angesteuert und erzeugt in der Hydraulikanlage 13 (Figur 4) den Druck in der Weise, daß die Anpreßkraft stets an die Verhältnisse im Schleifspalt 46 zwischen Werkzeug 5 und Werkstück 9 angepaßt ist. Diese Anpassung erfolgt während des Schleifprozesses (Vorschubbewegung des Werkzeugs 5 in $Z_2$-Koordinate und planetäre Bewegung des Werkstücks 9 in X-, Y-Koordinaten). Die Förderpumpe im Spül- und Filteraggregat 14 kann ebenfalls über Leitung 127 angesteuert werden, so daß der Druck des Spülmediums in gewissen Grenzen den Verhältnissen im Schleifspalt 46 zwischen Werkzeug 5 und Werkstück 9 angepaßt wird. Dies gilt für den eigentlichen Schleifprozeß in der $Z_2$-Koordinate und besonders für die Intervall-Abhebe- und Zustellbewegung ($V_3$, $V_1$).

Die zentrale Recheneinheit 90 gibt über den Datenbus 131 die Geschwindigkeiten $V_1$, $V_2$, $V_3$, die an die Verhältnisse im Schleifspalt 46 angepaßt sind, und die dynamisch gesteuerten Übergänge $V_{1a} \ldots V_{3b}$ in den Advance Selektor 89. Von dort gelangen die einzelnen Informationen in einer bestimmten Sequenz über die Leitungen 121, 122, 123, 124, 125 auf die Ventile 54, 55, 60 und auf den Regler 75 der Hydraulikanlage 13.

Die Figur 8 zeigt die Steuerung der Hydraulikanlage 13 für jeden Zyklus. Die beiden Komparatoren 140, 143 und der Prozessor 142 sind Bestandteile der zentralen Recheneinheit 90 der Figuren 6 und 7. Die Programmeingabe 85 oder 7 wird ungefähr mit den gleichen Werten wie in Figur 7 durchgeführt. $Z_2$ und $t_2$ sind der Schleifweg und die Schleifzeit, welche das Werkzeug 5 in jedem Zyklus benötigen darf. Diese Werte werden in den Komparator 140 gegeben, der mit einer Uhr 141 als Standardmaß zusammenarbeitet. Der Schleifweg Z für alle Zyklen dient als Vergleichsbasis und wird in den Komparator 140 und in den Prozessor 142 gegeben. Der Prozessor steht in Verbindung mit dem Komparator und überwacht, daß in jedem Zyklus der Schleifvorgang beendet wird, wenn der Schleifweg $Z_2$ vor der Schleifzeit $t_2$ oder umgekehrt erreicht wurde. In diesem Fall wird ein Beendigungssignal erzeugt, das über die Leitung 144 auf den Advance Selektor 89 gelangt. Die Werte von $Z_2$ und $t_2$ können für jeden Zyklus unterschiedlich sein. Dies richtet sich nach der Art der herzustellenden Raumform und nach dem Material des Werkstücks 9. Das Werkstück kann z.B. aus mehreren, unterschiedlichen Materialien zusammengesetzt sein. Zu diesem Zweck wird dem Prozessor 142 die Anzahl R der vorgesehenen Zyklen eingegeben. Ferner erhält der Prozessor die Eingabe der Exzentrizität E als Funktion des gesamten Schleifwegs Z. Dies ist bei der Figur 7 bereits beschrieben worden. Die Steuerung der Exzenterantriebe 11 erfolgt in gleicher Weise wie beim Ausführungsbeispiel der Figur 7. In jedem Zyklus kann die Exzentrizität E der planetären Bewegung des Werkstücks 9 anders sein. Der Betrag $P_{min}$ ist die untere Druckgrenze im Schleifspalt 46, die nicht unterschritten werden darf. Das Meßgerät 70 liefert über Leitung 72 den IST-Wert des Druckes zwischen Werkzeug 5 und Werkstück 9 an den Komparator 143, der ihn mit $P_{min}$ vergleicht. Der Prozessor 142 steht mit dem Komparator in dauernder Verbindung und sorgt durch Veränderung der Stellsignale auf dem Datenbus 145, daß die untere Druckgrenze $P_{min}$ nicht erreicht wird. Sollte dies dennoch geschehen, wird ein Signal «Kein Vorschub» über Leitung 146 in den Advance Selektor 89 gegeben. Das Programm des augenblicklichen Zyklusses wird noch einmal durchgefahren. In den meisten Fällen haben sich die Verhältnisse im Schleifspalt gebessert, so daß die Bearbeitung des Werkstücks 9 fortgesetzt werden kann. Wenn jedoch am Ende des gesamten Schleifprozesses die sogenannten «Leerlauf»-Planetärbewegungen programmiert sind, dann reagiert die zentrale Recheneinheit 90 der Figuren 6 und 7 in der Weise, daß diese Bewegungen ohne Vorschub bis zur unteren Druckgrenze $P_{min}$ fortgesetzt und dann abgeschaltet werden.

Der Prozessor 142 der Figur 8 gibt die Stellgrößen für die Geschwindigkeiten $V_1$, $V_2$, $V_3$, die Übergänge $V_{1a} \ldots V_{3b}$ und für die Zeiten $t_n$ ($t_1$, $t_2$, $t_3 \ldots$) über Datenbus 145 auf den Advance Selektor 89, der in bestimmter Sequenz die Ventile 54, 55, 60 und den Regler 75 in der Hydraulikanlage 13 über die Leitungen 121, 122, 123, 124, 125 steuert. Hierbei werden genau wie bei der Figur 7 die Anpreßkraft zwischen dem Werkzeug 5 und dem Werkstück 9 und die Geschwindigkeiten der verschiedenen Bewegungen an die Verhältnisse im Schleifspalt 46 angepaßt.

Bevorzugte Ausführungsbeispiele der Erfindung sind in den Figuren 1–9 beschrieben worden. Diese Ausführungsbeispiele können in einzelnen Teilen abgewandelt werden, wobei der eigentliche Erfindungsgedanke nicht geändert wird. So kann z.B. die hydraulische Anlage 13 der Figuren 1 und 4, welche die Vorschubbewegung mit kleiner Geschwindigkeit während des Schleifens, die intervallmäßigen Zustell- und Abhebebewegung mit hoher Geschwindigkeit und die Übergänge zwischen den Bewegungen durchführt, ersetzt werden durch eine elektrische Schaltung.

Ferner zeigt die Figur 1 nur ein Paar Werkzeug 5 und Werkstück 9. Selbstverständlich können mehrere solcher Paare vorgesehen werden, die alle in einem Arbeitsgang bearbeitet werden. Hierbei ist zu beachten, daß jedes Paar (Werkzeug 5 und Werkstück 9) zum anderen Paar versetzt an der Platte 4 und Tisch 10 aufgespannt wird. Durch diese Maßnahmen werden Ungenauigkeiten bei der Bearbeitung vermieden, die durch die Elastizität der von den dynamischen Bearbeitungskräften beeinflußten Maschinenteile 1, 3, 4, 8, 10 entstehen. Dieses Problem tritt nicht nur dann auf, wenn eine Seite des Werkstückes 9 stärker geschliffen wird als die andere Seite, sondern auch bei einem allseits gleichen Bearbeiten.

## Patentansprüche

1. Maschine zur Herstellung eines Werkstückes (9) einer bestimmten Raumform mittels eines Formschleif-Werkzeuges (5) von gleichender Raumform aber anderer Dimension unter Einhaltung eines Schleifspaltes (46) zwischen dem Formenschleifwerkzeug (5) und Werkstück (9) und unter Mitwirkung eines Schleifmittels und eines Spülmediums, wobei Formenschleifwerkzeug (5) und/oder Werkstück (9) eine aus einer Vorschub- und Planetärbewegung mit einstellbarer Exzentrizität bestehende Relativ-Bewegung erster Art zur Erzeugung der gewünschten Raumform des Werkstückes (9) und eine die Spülverhältnisse im Schleifspalt (46) verbessernde Intervall-Abhebe- und Anstell-Bewegung zweiter Art ausführen, und ein Antrieb für die Planetär-Bewegung, eine Stelleinrichtung für die Exzentrizitätseinstellung, sowie eine Befestigungseinrichtung für die Fixierung des eingestellten Betrages der Exzentrizität vorgesehen sind, gekennzeichnet durch:

– eine Antriebskonstruktion (18, 20, 21, 22, 24, 31, 32, 36, 37, 40, 45) für den Antrieb der Planetär-Bewegung und Änderung deren Exzentrizität vor, während oder nach der Planetär-Bewegung;

– eine, durch die Antriebskonstruktion in die Offen- oder Schließstellung bewegbare, Verriegelung (25) für die Freigabe oder Fixierung des Betrages der Exzentrizität;

– eine aus einer Steuerungsschaltung (12) mit Stellgliedern (13) bestehende Baugruppe, welche die Bewegungen des Formenschleifwerkzeuges (5) und Werkstückes (9) zueinander und voneinander in folgendem Muster steuert:

a) die Anpreßkraft zwischen Formenschleifwerkzeug (5) und Werkstück (9) wird während der Vorschubbewegung der Größe der im Schleifeingriff stehenden Flächen und dem Druck des im Schleifspalt (46) vorhandenen Spülmediums angepaßt;

b) die Geschwindigkeit ($V_1$, $V_3$) der Intervall-Abhebe- und Anstell-Bewegung der zweiten Art wird der Menge des im Schleifspalt (46) vorhandenen Spülmediums angepaßt; und

c) die Übergänge ($V_{1a}$, $V_{1b}$, $V_{2a}$, $V_{2b}$, $V_{3a}$, $V_{3b}$) zwischen den unterschiedlichen Geschwindigkeiten ($V_2$; $V_1$, $V_3$) der Vorschubbewegung und der Intervall-Abhebe- und Anstell-Bewegung werden dynamisch gesteuert.

2. Maschine nach Anspruch 1, dadurch gekennzeichnet, daß die Antriebskonstruktion zur Veränderung der Exzentrizität der Planetär-Bewegung eine in einem Gehäuse (16) drehbar gelagerte Hülse (18) enthält, deren eines Ende an einem Antrieb (20, 21) für ihre Drehbewegung befestigt ist und deren anderes Ende über die Verriegelung (25) mit der Welle (22) für die Einstellung der Exzentrizität verbunden ist, und ein am letztgenannten Ende vorgesehener Kurbeltrieb (29) im Arbeitstisch (10) des Elektroden-Werkstückes (9) drehbar gelagert ist.

3. Maschine nach Anspruch 1, dadurch gekennzeichnet, daß die Antriebskonstruktion zur Veränderung der Exzentrizität der Planetär-Bewegung folgende Bauteile enthält:

– eine in einem Gehäuse (16) drehbar gelagerte Hülse (18), deren eines Ende mit einem Antrieb (20, 21) für ihre Drehbewegung fest verbunden ist,

– eine in der Hülse (18) drehbar und verschiebbar gelagerte und wahlweise mit der Hülse (18) verbindbare Welle (22), die an ihrem einen Ende eine Kupplung (31, 32) für den Antrieb (37, 45) der Einstellung des Betrages der Exzentrizität aufweist, und deren anderes Ende einen Flansch (24) mit einem Kurbeltrieb (29) enthält, wobei der Mittelpunkt des Kurbeltriebes mit der Drehachse (23) der Welle (22) nicht fluchtet.

4. Maschine nach Anspruch 2 oder 3, dadurch gekennzeichnet, daß die Drehachse (19) der Hülse (18) mit der Drehachse (23) der Welle (22) nicht zusammenfällt.

5. Maschine nach Anspruch 2 oder 3, dadurch gekennzeichnet, daß der Antrieb (37, 45) für die Einstellung der Exzentrizität über Kupplung (31, 32) und Zahngetriebe (40, 41) die Drehbewegung zur Einstellung des gewünschten Betrages der Exzentrizität und die axiale Verschiebebewegung zur Lösung der Arretierung (25) mit einer Hülse (18) auf die Welle (22) überträgt.

6. Maschine nach einem der vorangehenden Ansprüche, dadurch gekennzeichnet, daß mehrere Antriebskonstruktionen (22, 24, 31, 32, 36, 37, 40, 41) zur Veränderung der Exzentrizität der Planetär-Bewegung vorgesehen sind, von denen mindestens eine Vorrichtung über einen Kurbeltrieb (29) im Arbeitstisch (10) für eine Planetär-Bewegung in der einen Richtung und mindestens eine Vorrichtung über einen Kurbeltrieb (29) in einem oder mehreren Gegengewichten für eine Planetär-Bewegung in der anderen Richtung gelagert sind, wobei die Beträge der Exzenter-Einstellung je nach Gewichtsverhältnissen Werkstück (9) und Arbeitstisch (10) / Gegengewichte bei beiden Vorrichtungstypen ungleich sind, und das bzw. die Gegengewichte entsprechend dem Gewichtsverhältnis verschoben sind.

7. Maschine nach einem der Ansprüche 1, 2, 5, 6, dadurch gekennzeichnet, daß die Verriegelung (25) aus einem oberen an der Welle (22) befestigten Zahnkranz (26) und einem unteren an der Hülse (18) befestigten Zahnkranz (27) besteht, und diese Zahnkränze wahlweise im Eingriff stehen oder voneinander trennbar sind.

8. Maschine nach einem der Ansprüche 2, 3, 4, 6, 7, dadurch gekennzeichnet, daß eine Scheibe (28), die mit Strichmarken (29) versehen ist, am Flansch (24) der Welle (22) oder am oberen Zahnkranz (26) befestigt ist, und zur Erfassung der eingestellten Exzentrizität mit einem Abtastgerät (50) in Verbindung steht.

9. Maschine nach Anspruch 1, dadurch gekennzeichnet, daß die Baugruppe, die die Anpreßkraft zwischen Formenschleif-Werkzeug (5) und Elektroden-Werkstück (9) während der Vorschub-Bewegung und der Geschwindigkeit ($V_1$, $V_3$) der in Intervallen oder Zyklen stattfindenden Abhebe- und Zustell-Bewegung zweiter Art an die Verhältnisse im Schleifspalt (46) anpaßt, aus einem Steuerventil (55), einem in der Nähe des Arbeitszylinders (1) angeordneten Proportionalventil (60) mit Regler (75) und aus einer die Ventile und den Regler beeinflussenden NC-Steuerung (12) besteht.

10. Maschine nach Anspruch 1 oder 9, dadurch gekennzeichnet, daß ein Proportionalventil (60) und die NC-Steuerung (12) der Baugruppe die Übergänge ($V_{1a}$ ... $V_{3b}$) der Vorschub-Bewegung und der Bewegung zweiter Art unter Berücksichtigung ihrer Anpassung zeitlich steuern.

11. Maschine nach Anspruch 1 oder 9, dadurch gekennzeichnet, daß ein Proportionalventil (60) und die NC-Steuerung (12) der Baugruppe die Übergänge ($V_{1a}$ ... $V_{3b}$) der stark unterschiedlichen Geschwindigkeiten ($V_1$, $V_2$, $V_3$) der Vorschub-Bewegung und der Bewegung zweiter Art unter Berücksichtigung des Vorschubweges (Z) steuern.

12. Maschine nach Anspruch 1 oder 9, dadurch gekennzeichnet, daß ein Proportionalventil (60) und die NC-Steuerung (12) der Baugruppe die großen Geschwindigkeiten ($V_1$, $V_3$) und die kleinen Geschwindigkeiten ($V_2$) den Verhältnissen im Schleifspalt (46) anpassen.

13. Maschine nach Anspruch 1 oder 9, dadurch gekennzeichnet, daß ein Proportionalventil (60) und die NC-Steuerung (12) der Baugruppe die Vorschubbewegung ($V_2$) nach dem Vorschubweg ($Z_2$) und die Bewegung zweiter Art nach einer vorgegebenen Zeit steuern.

14. Maschine nach Anspruch 1 oder 9, dadurch gekennzeichnet, daß ein Proportionalventil (60) und die NC-Steuerung (12) der Baugruppe die Vorschubbewegung ($V_2$) nach einer vorgegebenen Schleifzeit und die Bewegung der zweiten Art nach einem den Hub dieser Bewegung definierenden Weg ($Z_1$) steuern.

15. Maschine nach Ansprüchen 1 und 9, dadurch gekennzeichnet, daß die NC-Steuerung (12) und ein zwischen dem Proportionalventil (60) und der Pumpe (56) angeordnetes zweites Proportionalventil (54) den Systemdruck in vorbestimmtem Maße nur dann erhöht, wenn der von der NC-Steuerung (12) vorgegebene Schleifweg ($Z_2$) in der gewünschten Zeit (tz) nicht erreicht worden ist.

16. Maschine nach Ansprüchen 1 und 9, dadurch gekennzeichnet, daß die NC-Steuerung (12) und ein zwischen dem Proportionalventil (60) und der Pumpe (56) angeordnetes zweites Proportionalventil (54) den Systemdruck in vorbestimmtem Maße nur dann erhöht, wenn in der vorgegebenen Schleifzeit (tz) die gewünschte Vorschubtiefe ($Z_2$) nicht erreicht worden ist.

17. Maschine nach Anspruch 1, dadurch gekennzeichnet, daß die NC-Steuerung (12) nach Programm die Exzentrizität in Abhängigkeit vom Vorschubweg ($Z_2$) verstellt.

18. Maschine nach Anspruch 17, dadurch gekennzeichnet, daß die NC-Steuerung (12) die Abhängigkeit der Exzentrizität vom Vorschubweg ($Z_2$) nach einer beliebigen Kurve steuert.

19. Maschine nach Anspruch 1, dadurch gekennzeichnet, daß die NC-Steuerung (12) bei Erreichen der vorgeschriebenen Tiefe (Endmaß 2) den letzten Zyklus der Bewegung der zweiten Art einige Male ohne die Vorschub-Bewegung wiederholt.

20. Maschine nach Anspruch 16, dadurch gekennzeichnet, daß die NC-Steuerung (12) den letzten Zyklus der Bewegung der zweiten Art solange wiederholt, bis die Anpreßkraft ein vorgeschriebenes Minimum erreicht hat.

21. Maschine nach Ansprüchen 1 und 3, dadurch gekennzeichnet, daß ein Schrittmotor vorgesehen ist, der auf Ausgangssignale der NC-Steuerung (12) anspricht und mindestens einen Antrieb (37, 45) für die Einstellung der Exzentrizität schrittweise betätigt.

22. Maschine nach Anspruch 1, dadurch gekennzeichnet, daß zur Unterstützung der Spülverhältnisse im Schleifspalt (46) ein Ausgleichsgefäß (170) zwischen dem Spülaggregat (14) und dem Werkzeug (5) und/oder Werkstück (9) vorgesehen ist.

23. Maschine nach Anspruch 1, dadurch gekennzeichnet, daß mehrere Werkzeuge (5) und Werkstücke (9) paarweise auf der Platte (4) und dem Maschinentisch (10) angeordnet sind und jedes Paar versetzt zueinander aufgespannt ist.

## Claims

1. Machine for making an electrode workpiece (9) of a definite shape by means of a structural-grinding tool of similar configuration but of other dimensions whilst maintaining an abrading gap between the grinding tool (5) and the workpiece (9) and with the cooperation of an abrading means and a flushing medium, wherein the structural-grinding tool (5) and/or the workpiece (9) conduct a relative motion of a first kind consisting of an advance and planetary motion of adjustable eccentricity for generating the desired spatial configuration of the workpiece (9) and a periodically retract and advance motion of a second kind for improving the flushing conditions within the abrading gap (46) and wherein a drive for the planetary motion, a control device for adjusting the eccentricity and a device for fixing the preset amount of the eccentricity are provided, characterized by:
— drive means (18, 20, 21, 22, 24, 31, 32, 36, 37, 40, 45) for effecting the planetary motion and modifying its eccentricity before, during and after the planetary motion;
— a latch (25) displaceable by the drive construction into an opening or a locking position for releasing or fixing the amount of the eccentricity;
— an assembly consisting of a control circuit (12) with setting members (13) which controls the motions of the structural-grinding tool (5) and of the workpiece (9) towards and away from each other in the following manner:
a) the abrading force between grinding tool (5) and workpiece (9) is adjusted, during the advance motion, to the size of the surfaces being in grinding contact and to the pressure of the flushing medium prevailing in the abrading gap (46);
b) the velocity ($V_1$, $V_3$) of the periodically retract and advance motion of the second kind is accommodated to the quantity of the flushing medium prevailing in the abrading gap (46), and
c) the transitions ($V_{1a}$, $V_{1b}$, $V_{2a}$, $V_{2b}$, $V_{3a}$, $V_{3b}$) between the different velocities ($V_2$, $V_1$, $V_3$) of the advance motion and of the periodical liftoff and feed motion are controlled dynamically.

2. Machine according to Claim 1, characterized in that the drive means for changing the eccentricity of the planetary motion comprises a sleeve (18) rotatably supported in a casing (16), the one end of said sleeve being attached to a drive (20, 21) for its rotary motion and the other end being connected, via the latch (25), to the shaft (22) for adjusting the eccentricity, and that a crank (29) provided on said lastmentioned end is rotatably supported in the work table (10) of the electrode workpiece (9).

3. Machine according to Claim 1, characterized in that the drive means for changing the eccentricity of the planetary motion comprises the following parts:
— a sleeve (18) rotatably supported in a casing (16), one end of said sleeve being connected to a drive (20, 21) for its rotary motion,
— a shaft (22) rotatably and displaceably supported within the sleeve (18) and selectively connectable to it, said shaft (22) comprising at its one end a coupling (31, 32) for the drive (37, 45) for adjusting the amount of the eccentricity, the other end of said shaft comprising a flange (24) with a crank (29), the centre of the crank being offset from the axis of rotation (23) of the shaft.

4. Machine according to Claim 2 or 3, characterized in that the axis of rotation (19) of the sleeve (18) is offset with respect to the axis of rotation (23) of the shaft (22).

5. Machine according to Claim 2 or 3, characterized in that the drive (37, 45) for the setting of the eccentricity via coupling (31, 32) and gearwheel drive (41, 42) transfers the rotary motion for setting the desired eccentricity and the axial displacement for relaising the latch (25) by means of a sleeve (18).

6. Machine according to one of the preceding Claims, characterized in that several drive means (22, 24, 31, 32, 36, 37, 40, 41) for changing the eccentricity of the planetary motion are provided, at least one of which is supported through a crank drive (29) in the work table (10) for imparting a planetary motion in one sense and at least another drive means is supported through a crank (29) in one or more counterweights for imparting a planetary motion in the opposite sense wherein the amounts of the eccenter setting are unequal on both drive means, depending upon the ratio of the weights of the workpiece (9) and the work table (10) to the ones of the counterweights, and that the counterweights are displaced according to said weight ratio.

7. Machine according to one of Claims 1, 2, 5 and 6, characterized in that the latch (25) consists of an upper serrated ring (26) fastened to the shaft (22) and a lower serrated ring (27) fastened to the sleeve (18), the serrated rings selectively being engaged with or separated from each other.

8. Machine according to one of Claims 2, 3, 4, 6 and 7, characterized in that a disc (28) provided with graduation marks (29) is fastened to the flange (24) of the shaft (22) or to the upper serrated ring (26) and is cooperating with a sensor (50) for sensing the preset eccentricity.

9. Machine according to Claim 1, characterized in that the assembly which accommodates the pressure between the form-grinding tool and the electrode workpiece (9) to the conditions prevailing in the abrading gap (46), during the advance motion and the velocity ($V_1$, $V_3$) of the advance and retract motion of the second kind taking place in intervals or cycles, consists of a control valve (55), of a proportional valve (60) with a regulator (75) disposed in proximity of the operating cylinder (1) and of a numeric control (12) acting on the valves and on the regulator.

10. Machine according to Claim 1 or 9, characterized in that a proportional valve (60) and the numeric control (12) of the assembly chronologically control the transitions ($V_{1a} \ldots V_{3b}$) of the advance motion and of the motion of the second kind in relation to their adjustment.

11. Machine according to Claim 1 or 9, characterized in that a proportional valve (60) and the numeric control (12) of the assembly control the transitions ($V_{1a} \ldots V_{3b}$) of the considerably different velocities ($V_1$, $V_2$, $V_3$) and of the motion of the second kind in relation to the feed displacement ($Z$).

12. Machine according to Claim 1 or 9, characterized in that a proportional valve (60) and the numeric control (12) of the assembly accommodate the high velocities ($V_1$, $V_3$) and the small velocities ($V_2$) to the conditions prevailing in the abrading gap (46).

13. Machine according to Claim 1 or 9, characterized in that a proportional valve (60) and the numeric control (12) of the assembly control the advance motion ($V_2$) in relation to the feed displacement ($Z_2$) and the motion of the second kind in relation to a preset time.

14. Machine according to Claim 1 or 9, characterized in that a proportional valve (60) and the numeric control (12) of the assembly control the advance motion in relation to a preset abrading period and the motion of the second kind in relation to a displacement ($Z_1$) defining the stroke of said motion.

15. Machine according to Claims 1 and 9, characterized in that the numeric control (12) and a second proportional valve (54) arranged between said proportional valve (60) and the pump (56) raise the pressure in the system by a predeterminat amount only when the abrading displacement ($Z_2$) preset by the numeric control has not been attained within the desired time ($t_z$).

16. Machine according to Claims 1 and 9, characterized in that the numeric control (12) and a second proportional valve (54) arranged between said proportional valve (60) and the pump (56) raise the pressure in the system by a predeterminat amount only when within the preset abrading period ($t_z$) the desired feed displacement ($Z_2$) has not been attained.

17. Machine according to Claim 1, characterized in that the numeric control (12) changes the eccentricity in relation to the feed displacement ($Z_2$) according to a program.

18. Machine according to Claim 17, characterized in that the numeric control (12) controls the dependency of the eccentricity from the feed displacement ($Z_2$) according to any desired curve.

19. Machine according to Claim 1, characterized in that the numeric control (12) repeats the last cycle of the motion of the second kind several times without repeating the advance motion upon reaching the prescribed abrading depth (stop measure 2).

20. Machine according to Claim 16, characterized in that the numeric control (12) repeats the last cycle of the motion of the second kind so long until the abrading force has attained a prescribed minimum.

21. Machine according to Claims 1 and 3, characterized in that there is provided a stepping motor responding to control signals of the numeric control (12) and stepwise actuating at least one drive (37, 45) for setting the eccentricity.

22. Machine according to Claim 1, characterized in that for assisting the flushing conditions within the abrading gap (46) a compensation chamber (170) is arranged between the flushing device (14) and the tool (5) and/or the workpiece (9).

23. Machine according to Claim 1, characterized in that a number of tools (5) and workpieces (9) are arranged in pairs on the platen (4) and the work table (10) and that each pair is clamped in offset spaced relation to another such pair.

**Revendications**

1. Machine pour fabriquer une pièce (9) de forme définie au moyen d'un outil profilé de rodage (5) ayant la même forme, mais d'autres dimensions, avec maintien d'un interstice de rodage (46) entre l'outil profilé de rodage (5) et la pièce (9) et avec intervention d'un abrasif et d'un milieu d'arrosage, l'outil profilé de rodage (5) et/ou la pièce (9) effectuant un mouvement relatif du premier genre consistant en un mouvement d'avance et planétaire d'excentricité réglable pour donner à la pièce (9) la forme voulue et en un mouvement d'écartement et de remise en place, du deuxième genre, effectué par intermittence pour améliorer les conditions d'arrosage dans l'interstice de rodage (46) et la machine comportant un dispositif d'entraînement du mouvement planétaire, un dispositif de réglage pour le réglage de l'excentricité et un dispositif de fixation pour la fixation de la valeur de réglage de l'excentricité, caractérisée par un dispositif d'entraînement (18, 20, 21, 22, 24, 31, 32, 36, 37, 40, 45) pour la commande du mouvement planétaire et la modification de son excentricité avant, pendant ou après le mouvement planétaire, par un dispositif de verrouillage (25) qui peut être placé par le dispositif d'entraînement dans la position d'ouverture ou de fermeture et assure la modification ou la fixation de la valeur de l'excentricité, par un groupe d'éléments constitutifs qui comprend un circuit de commande (12) comportant des organes de réglage (13) et qui commande les mouvements de l'outil profilé de rodage (5) et de la pièce (9) l'un vers l'autre et en s'écartant l'un de l'autre dans les conditions suivantes:

a) la force de poussée entre l'outil profilé de rodage (5) et la pièce (9) est adaptée pendant le mouvement d'avance à la grandeur des surfaces en prise pour le rodage et à la pression du milieu d'arrosage qui se trouve dans l'interstice de rodage (46);

b) la vitesse ($V_1$, $V_3$) du mouvement d'écartement et de remise en place du deuxième genre effectué par intermittence est adaptée à la quantité de milieu d'arrosage qui se trouve dans l'interstice de rodage (46); et

c) les transitions ($V_{1a}$, $V_{1b}$, $V_{2a}$, $V_{2b}$, $V_{3a}$, $V_{3b}$) entre les vitesses différentes ($V_2$; $V_1$, $V_3$) du mouvement d'avance et le mouvement d'écartement et de remise en place effectué par intermittence sont commandées d'une manière dynamique.

2. Machine selon la revendication 1, caractérisée en ce que le dispositif de commande de la modification de l'excentricité du mouvement planétaire contient une douille (18) qui est montée de manière à pouvoir tourner dans une enveloppe (16) et dont l'une des extrémités est fixée à un dispositif d'entraînement (20, 21) pour son mouvement de rotation et dont l'autre extrémité est reliée, par l'intermédiaire du dispositif de verrouillage (25), à l'arbre (22) pour le réglage de l'excentricité et qu'un dispositif d'entraînement à manivelle (29) placé à cette extrémité mentionnée en dernier lieu est monté de manière à pouvoir tourner dans la table de travail (10) de la pièce d'électrode (9).

3. Machine selon la revendication 1, caractérisée en ce que le dispositif de commande assurant la modificiation de l'excentricité du mouvement planétaire contient les éléments constitutifs suivants: une douille (18) qui est montée de manière à pouvoir tourner dans une enveloppe (16) et dont l'une des extrémités est reliée à un dispositif d'entraînement (20, 21) pour son mouvement de rotation; un arbre (22) qui est monté de manière à pouvoir tourner et se déplacer dans la douille (18) et peut être relié au choix avec la douille (18) qui, à l'une de ses extrémités, comporte un accouplement (31, 32) pour le dispositif de commande (37, 45) du réglage de l'excentricité et dont l'autre extrémité contient une bride (24) munie d'un dispositif d'entraînement à manivelle (29), le centre du dispositif d'entraînement à manivelle n'étant pas dans l'alignement de l'axe de rotation (23) de l'arbre (22).

4. Machine selon l'une des revendications 2 ou 3, caractérisée en ce que l'axe de rotation (19) de la douille (18) ne coïncide pas avec l'axe de rotation (23) de l'arbre (22).

5. Machine selon l'une des revendications 2 ou 3, caractérisée en ce que le dispositif de commande (37, 45) pour le réglage de l'excentricité

par l'intermédiaire de l'accouplement (31, 32) et de l'engrenage (40, 41) transmet à l'arbre (22) le mouvement de rotation pour le réglage de l'excentricité et le déplacement axial pour faire cesser le blocage (25) avec une douille (18).

6. Machine selon l'une des revendications 1 à 5, caractérisée en ce qu'elle comporte plusieurs dispositifs de commande (22, 24, 31, 32, 36, 37, 40, 41) pour la modification de l'excentricité du mouvement planétaire, parmi lesquels au moins un dispositif est monté, par l'intermédiaire d'un dispositif d'entraînement à manivelle (29), dans la table de travail (10) pour un mouvement planétaire dans une direction et au moins un dispositif est monté, par l'intermédiaire d'un dispositf d'entraînement à manivelle (29), dans un ou plusieurs contrepoids pour un mouvement planétaire dans l'autre direction, les valeurs de réglage de l'excentricité étant différentes, dans les deux types de dispositifs, suivant les rapports de poids pièce (9) et table de travail (10)/contrepoids et que le ou les contrepoids sont déplacés suivant le rapport des poids.

7. Machine selon l'une des revendications 1, 2, 5, 6, caractérisée en ce que le dispositif de verrouillage (25) est constitué par une couronne dentée supérieure (26) fixée à l'arbre (22) et par une couronne dentée inférieure (27) fixée à la douille (18) et en ce que ces couronnes dentées peuvent au choix être en prise ou séparées l'une de l'autre.

8. Machine selon l'une des revendications 2, 3, 4, 6, 7, caractérisée en ce qu'un disque (28) muni de traits de marques (29) est fixé à la bride (24) de l'arbre (22) ou à la couronne dentée supérieure (26) et est relié, pour la détermination de la valeur de réglage de l'excentricité, à un appareil palpeur (50).

9. Machine selon la revendication 1, caractérisée en ce que le groupe d'éléments qui adapte la force de poussée entre l'outil profilé de formage (5) et la pièce d'électrode (9) pendant le mouvement d'avance et la vitesse ($V_1$, $V_3$) du mouvement d'écartement et de remise en place du deuxième genre, qui s'effectue par intermittence et cycles, aux conditions existant dans l'interstice de rodage (46) est constitué par une soupape de commande (55), par une soupape proportionnelle (60) placée à proximité du vérin de travail (1) et associée à un régulateur (75) et par un dispositif de commande numérique (12) qui agit sur les soupapes et sur le régulateur.

10. Machine selon l'une des revendications 1 ou 9, caractérisée en ce qu'une soupape proportionnelle (60) et le dispositif de commande numérique (12) du groupe d'éléments constitutifs commandent chronologiquement les transitions ($V_{1a}$, $V_2$, $V_{3b}$) du mouvement d'avance et du mouvement du deuxième genre compte tenu de leur adaptation.

11. Machine selon l'une des revendications 1 ou 9, caractérisée en ce qu'une soupape proportionnelle (60) et le dispositif de commande numérique (12) du groupe d'éléments constitutifs commandent les transitions ($V_{1a}$ ... $V_{3b}$) des vitesses très différentes ($V_1$, $V_2$, $V_3$) du mouvement d'avance et du mouvement du deuxième genre compte tenu du trajet d'avance (Z).

12. Machine selon l'une des revendications 1 ou 9, caractérisée en ce qu'une soupape proportionnelle (60) et le dispositif de commande numérique (12) du groupe d'éléments constitutifs adaptent les grandes vitesses ($V_1$, $V_3$) et les petites vitesses ($V_2$) aux conditions existant dans l'interstice de rodage (46).

13. Machine selon l'une des revendications 1 ou 9, caractérisée en ce qu'une soupape proportionnelle (60) et le dispositif de commande numérique (12) du groupe d'éléments constitutifs commandent le mouvement d'avance ($V_2$) d'après le trajet d'avance ($Z_2$) et le mouvement du deuxième genre d'après une durée déterminée.

14. Machine selon l'une des revendications 1 ou 9, caractérisée en ce qu'une soupape proportionnelle (60) et le dispositif de commande numérique (12) du groupe d'éléments constitutifs commandent le mouvement d'avance ($V_2$) d'après une durée de rodage déterminée et le mouvement du deuxième genre d'après un trajet ($Z_1$) définissant la course de ce mouvement.

15. Machine selon les revendications 1 et 9, caractérisée en ce que le dispositif de commande numérique (12) et une deuxième soupape proportionnelle (54) intercalée entre la soupape proportionnelle (60) et la pompe (56) n'augmentent la pression du système d'une quantité déterminée que lorsque le trajet de rodage ($Z_2$) déterminé par le dispositif de commande numérique (12) n'a pas été parcouru dans le temps voulu (tz).

16. Machine selon les revendications 1 et 9, caractérisée en ce que le dispositif de commande numérique (12) et une deuxième soupape proportionnelle (54) intercalée entre la soupape proportionnelle (60) et la pompe (56) n'augmentent la pression du système d'une quantité déterminée que lorsque, dans le temps de rodage fixé (tz), la profondeur d'avance ($Z_2$) n'a pas été atteinte.

17. Machine selon la revendication 1, caractérisée en ce que le dispositif de commande numérique (12) règle suivant un programme l'excentricité en fonction du trajet d'avance ($Z_2$).

18. Machine selon la revendication 17, caractérisée en ce que le dispositif de commande numérique (12) commande la relation entre l'excentricité et le trajet d'avance ($Z_2$) d'après une courbe quelconque.

19. Machine selon la revendication 1, caractérisée en ce que le dispositif de commande numérique (12), une fois la profondeur prescrite (mesure finale 2) atteinte, répète un certain nombre de fois le dernier cycle du mouvement du deuxième genre sans le mouvement d'avance.

20. Machine selon la revendication 16, caractérisée en ce que le dispositif de commande numérique (12) répète le dernier cycle du mouvement du deuxième genre jusqu'à ce que la force de poussée ait atteint un minimum déterminé.

21. Machine selon les revendications 1 et 3, caractérisée en ce qu'elle comprend un moteur pas à pas qui réagit aux signaux de sortie du dispositif de commande numérique (12) et met en action au moins un dispositif d'entraînement (37, 45) pour le réglage de l'excentricité.

22. Machine selon la revendication 1, caractérisée en ce que, pour améliorer les conditions d'arrosage dans l'interstice de rodage (46), un récipient de compensation (170) est intercalé entre l'installation de nettoyage (14) et l'outil (5) et/ou la pièce (9).

23. Machine selon la revendication 1, caractérisée en ce que plusieurs outils (5) et plusieurs pièces (9) sont montés par couples sur la plaque (4) et sur la table de machine (10) et que chaque couple est décalé par rapport aux autres.

**Fig.1**

**Fig.3**

**Fig.9**

**Fig.2**

Fig.4

Fig.5

**Fig.6**

EP 0 118 606 B1

Fig.7

Fig.8